# EUROPEAN PATENT SPECIFICATION

(11) **EP 1 726 850 B1**
(45) Date of publication and mention of the grant of the patent: **10.09.2008**
(21) Application number: 06010701.8
(22) Date of filing: 23.05.2006
(51) Int. Cl.: F16H 37/08

(54) **Split type continuously variable transmission**
Verzweigtes, stufenloses Getriebe
Boîte de vitesses à variation continue ramifiée

(30) Priority: 26.05.2005 JP 2005154535
(43) Date of publication of application: 29.11.2006
(73) Proprietor: NISSAN MOTOR CO., LTD., Yokohama-shi, Kanagawa 221-0023 (JP)
(72) Inventor: Koyama, Takao, Atsugi-shi Kanagawa 243-0201 (JP)
(74) Representative: Grünecker, Kinkeldey, Stockmair & Schwanhäusser Anwaltssozietät

(56) References cited:
- WO-A-94/10483
- WO-A-20/04038257
- DE-A1- 3 703 245
- DE-B3- 10 310 549
- US-A- 4 644 821

## Description

The present invention relates to a split type continuously variable transmission (split type CVT) according to the preamble portion of claim 1 which is lightened in weight by splitting a transmitted torque into a continuously variable transmission mechanism and a planetary gearset so as to decrease a torque load applied to the transmission.

Japanese Published Patent Applications No. (Heisei) 9-89071 and No. 2002-21969 disclose a transmission constructed by combining a continuously variable transmission mechanism and a planetary gearset. More specifically, Japanese Published Patent Application No. (Heisei) 9-89071 discloses an infinite transmission ratio CVT in which a toroidal type CVT mechanism and a reducer are disposed in parallel between a unit input shaft and a unit output shaft. Japanese Published Patent Application No. 2002-21969 discloses a double split type CVT in which a toroidal type CVT mechanism and a second power transmission mechanism are disposed in parallel between an input shaft and an output shaft.

However, both of the infinite transmission ratio CVT and the double split type CVT have a situation that an engine torque is transmitted only through one of the two parallel arranged mechanisms. More specifically, the infinite transmission ratio CVT set in a direct-connection mode for high-speed running transmits the engine torque only through the CVT mechanism without using the reducer. The double split type CVT set in a low speed mode transmits the engine torque only through the CVT mechanism without using the second power transmission mechanism. Therefore, these arrangements cannot ensure a split effect throughout a speed range and thereby having a limitation of improving a durability, a size and a weight.

Further, WO 2004/038257 A1, which shows all the features of the preamble of claim 1, discloses a power split transmission having a distributor mechanism (coupling mechanism) being a planetary gear mechanism. Therein, the ring gear of said coupling mechanism is connected to the input side of one of the pulleys of the CVT and the sun gear of said coupling mechanism is connected to the input side of the other one of the pulleys of the CVT. Thus, the ring gear and the sun gear of the same planetary gear mechanism are connected with each other via the CVT. Further, it provides first and second power distribution paths in view of the additional shaft connected on one side to the sun gear of the coupling mechanism and on the other side to the output shaft.

Further, DE 10310 549 B3 discloses a power split transmission in which an input side (E) is connected via a first sun gear, first planetary gears, second planetary gears sitting on the same hollow shaft as the first planetary gears, and second sun gear to one side of the CVT. Further, the carrier of said input side planetary gear is connected via further gears to the other side of said CVT.

Further, DE 37 03 245 A1 provides another distributor mechanism in which a crankshaft is connected via first sun gear, first planetary gear, second planetary gear sitting on the same hollow shaft, second sun gear, central shaft, and two gears to one side of a CVT. Further, the carrier supporting the first and second planetary gears is connected via hollow shaft, and two gears to the respectively other side of said CVT.

It is an objective of the present invention to provide a split type continuously variable transmission as indicated above which is capable of ensuring a split effect throughout a speed range of the split type CVT.

This objective is solved in an inventive manner by a split type continuously variable transmission having the feature combination of claim 1.

This split type continuously variable transmission (CVT) comprises: a rotation transmitting mechanism comprising a plurality of rotating elements among which rotation and torque are transmitted, revolution speeds of the rotating elements being represented by a lever in a lever diagram, the rotating element located at an intermediate portion of the lever being employed as an input element of receiving an input rotation, one of the two rotating elements, which are located at both end portions of the lever and opposite sides of the input element, being employed as an output element of outputting an output rotation so that a first torque transmission path of transmitting a torque is produced between the input and output elements in the rotation transmission mechanism; and a continuously variable transmission (CVT) mechanism capable of continuously varying a CVT mechanism transmission ratio, the CVT mechanism being connected to the two rotating elements located at both end portions of the lever so that a second transmission path of transmitting the torque is produced between the input and output elements through the CVT mechanism wherein the rotation transmission mechanism comprises four rotating elements, a brake being attached to a rotating element for stopping a rotation of this rotating element, which is one of two rotating elements located at an intermediate portion of the lever, and which is different from the input element.

Preferred embodiments are laid down in the dependent claims.

In the following, the present invention is explained in greater detail with respect to several embodiments thereof in conjunction with the accompanying drawings, wherein:

Fig. 1 is a skeleton diagram showing a transaxle including a split type continuously variable transmission (CVT) according to a first embodiment.

Fig. 2 is a table showing engagement and disengagement states of clutches and a brake of the split type CVT in accordance with a selected mode.

Fig. 3 is a skeleton diagram showing the engagement and disengagement states of the clutches and the brake and split torque flow in a low mode.

Fig. 4 is a skeleton diagram showing transmission paths of merged torque and split torques, which are transmitted among gears of the transaxle in the low mode.

Fig. 5 is a skeleton diagram showing the engagement and disengagement states of the clutches and the brake and split torque transmission path in a high mode.

Fig. 6 is a skeleton diagram showing torque transmission paths of merged torque and split torques, which are transmitted among the gears of the transaxle in the high mode.

Fig. 7 is a skeleton diagram showing the engagement and disengagement states of the clutches and the brake and split torque transmission path in a reverse mode.

Fig. 8 is a skeleton diagram showing flows of merged torque and split torques, which are transmitted among the gears of the transaxle in the reverse mode.

Fig. 9 is a graph showing a relationship between a variator transmission ratio of the split type CVT and a transaxle transmission ratio.

Fig. 10 is a lever diagram showing revolution speeds of elements in the low mode.

Fig. 11 is a lever diagram showing the revolution speeds of the elements in the high mode.

Fig. 12 is a graph showing a transmission efficiency of the split type CVT according to the first embodiment.

Fig. 13 is a graph showing a share rate of split torques in the split type CVT.

Fig. 14 is a table showing various embodiments.

Fig. 15 is a skeleton diagram showing the split type CVT according to the embodiment No. □-1 shown in Fig. 14.

Fig. 16 is a skeleton diagram showing the split type CVT according to the embodiment No. □-4 shown in Fig. 14.

Fig. 17 is a skeleton diagram showing the split type CVT according to the embodiment No. □-2 shown in Fig. 14.

Fig. 18 is a skeleton diagram showing the split type CVT according to the embodiment No. □-3 shown in Fig. 14.

Fig. 19 is another graph showing the share rate of split torques in the split type CVT.

Fig. 20 is a skeleton diagram showing the split type CVT according to the embodiment No. □-5 shown in Fig. 19.

Fig. 21 is a skeleton diagram showing the split type CVT according to the embodiment No. □-6 shown in Fig. 19.

Fig. 22 is another graph showing the share rate of split torques in the split type CVT, and

Fig. 23 is another graph showing the share rate of split torques in the split type CVT.

Hereinafter there is discussed embodiments with reference to the drawings.

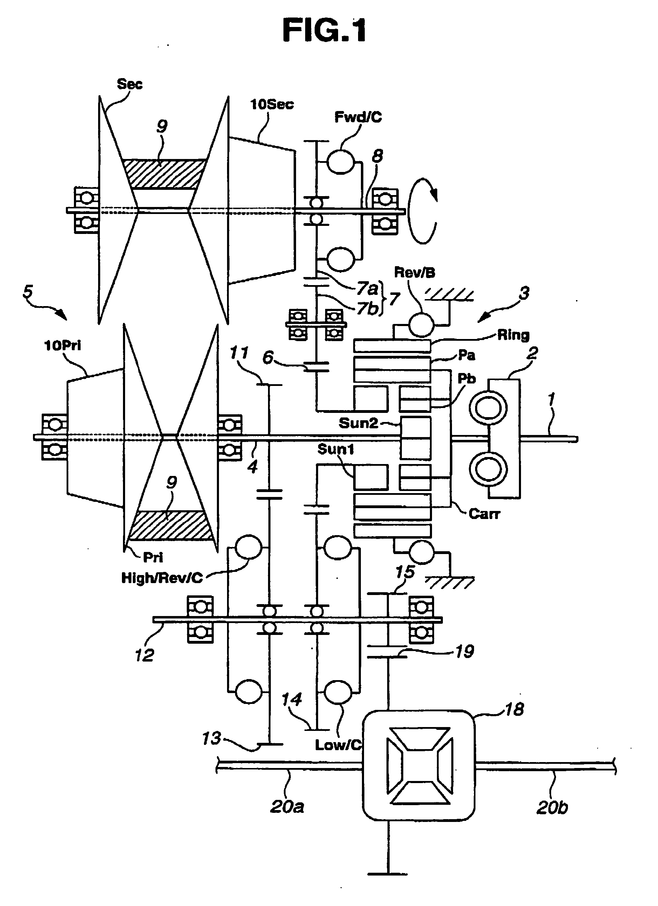

Fig. 1 is a skeleton diagram showing a split type continuously variable transmission (split-type CVT) according to a first embodiment.

The split-type CVT is constructed as a transaxle for a front-engine front-drive vehicle (FF vehicle) wherein an internal combustion engine is transversely mounted in an engine compartment of the FF vehicle. The split-type CVT comprises a Ravigneaux planetary gearset 3 functioning as a rotation transmitting mechanism, a variator 5 functioning as a continuously variable transmission mechanism, an output shaft 12 and front driver shafts 20a and 20b.

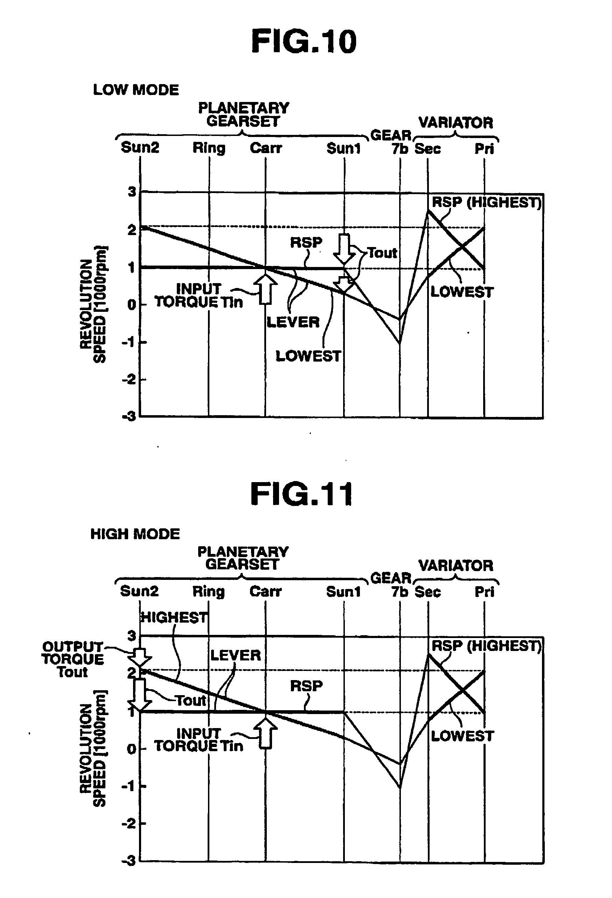

A crankshaft 1 of the engine acting as a prime mover is connected to a carrier Carr of Ravigneaux planetary gearset 3 through a damper 2. Ravigneaux planetary gearset 3 comprises carrier Carr, two sun gears Sun1 and Sun2, and a ring gear Ring which are rotating elements. By mutually meshing these four elements as shown in Fig. 1, these four elements establish a relationship in revolution speeds as represented by one lever on a lever diagram shown in Figs. 10 and 11.

Carrier Carr rotatably supports pinion gears Pa and Pb. Pinion gears Pa are disposed outside of pinion gears Pb in diameter and mesh with pinion gears Pb, respectively. That is, a double pinion structure is constructed thereby. An axial length of pinion gears Pa is longer than that of pinion gears Pb.

Short-length pinion gears Pb, which are disposed inside of pinion gears Pa, mesh with sun gear Sun2. Long-length pinion gears Pa, which are disposed outside of pinion gears Pb, mesh with sun gear Sun1. That is, a diameter of sun gear Sun1 is larger than that of sun gear Sun2.

Pinion gears Pa mesh with an inner periphery (internal theeth) of ring gear Ring disposed outside of pinion gears Pa in diameter. A shaft 4, which is integrally and coaxially connected with small-diameter sun gear Sun2, penetrates a hole formed at a center of large-diameter sun gear Sun1. That is, pinion gears Pa and Pb, sun gear Sun1 and sun gear Sun2 are received in an inner space of ring gear Ring having a ring shape. Sun gears Sun1 and Sun2, ring gear Ring and carrier Carr are coaxially arranged.

Sun gear Sun1 and Sun gear Sun2 are interconnected through a variator 5, which is a V-belt type continuously variable transmission in this embodiment.

A gear 6 integrally connected with sun gear Sun1 meshes with a gearset 7. Gearset 7 is constructed by a gear 7a and a gear 7b for transmitting rotation revolution and torque from Ravigneaux planetary gearset 3 to variator 5. Gearset 7 is connected to a shaft 8 through a forward clutch Fwd/C. When forward clutch Fwd/C is put in an engaged state, the rotation of sun gear Sun1 is transmitted to shaft 8. Shaft 8 is integrally and coaxially connected with a secondary pulley Sec of variator 5. Both end portions of shaft 8 are supported by bearings to axially support secondary pulley Sec.

In contrast to this, shaft 4 of sun gear Sun2 is integrally and coaxially connected with primary pulley Pri. Both end portions of shaft 4 are supported by bearings to axially support primary pulley Pri.

A V-belt 9 is wound on primary pulley Pri and secondary pulley sec. When a shift operation is executed, flange clearances of primary pulley Pri and secondary pulley Sec are continuously varied by controlling hydraulic pressures supplied to piston chambers 10pri and 10sec of the respective primary and secondary pulleys Pri and Sec. By this hydraulic pressure control, connection effective diameters of primary and secondary pulleys Pri and Sec are continuously varied, and therefore a transmission ratio between primary and secondary pulleys Pri and Sec is continuously varied as a shift operation.

A gear 11 is fixed on shaft 4, which also functions as a shaft of primary pulley Pri. Gear 11 meshes with a gear 13 coaxially disposed on an output shaft 12. A high-speed/reverse clutch High/Rev/C is interposed between gear 13 and output shaft 12. When high-speed/reverse clutch High/Rev/C is put in an engaged state, output shaft 12 rotates integrally with gear 13.

Gear 6 connected to sun gear Sun1 meshes with a gear 14 coaxially disposed on output shaft 12. A low-speed clutch Low/C is interposed between output shaft 12 and gear 14. When low-speed clutch Low/C is put in an engaged state, output shaft 12 integrally rotates with gear 14.

A gear 15 is fixed on output shaft 12. Gear 15 meshes with a ring gear 19 of a differential gear device 18. Differential gear device 18 is connected to drive wheels through left and right axles 20a and 20b of a front drive shaft 20, which extends along a vehicle lateral direction.

Returning the explanation to Ravigneaux planetary gearset 3, a reverse brake Rev/B is attached to ring gear Ring. When reverse brake Rev/B is put in an engaged state, ring gear Ring is fixed and put in a rotation disable state.

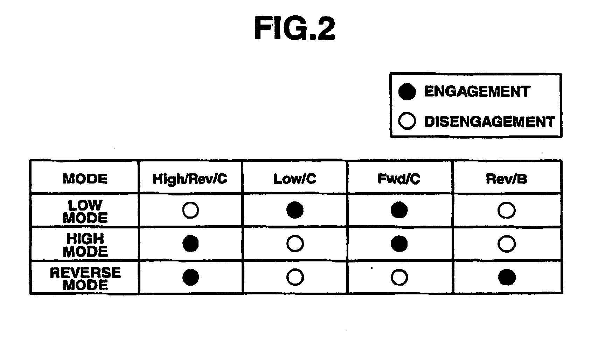

Subsequently, there will be discussed an operation of the split type CVT according to the first embodiment. The split type CVT produces a low mode for low-speed forward running, a high mode for high-speed forward running and a reverse mode for reverse running. By selectively putting the above-discussed clutches and brakes in engaged or disengaged state according to a table shown in Fig. 2, one of the low mode, the high mode and the reverse mode is properly selected.

Subsequently, there are in turn discussed torque transmission paths of the low mode, the high mode and the reverse mode, respectively.

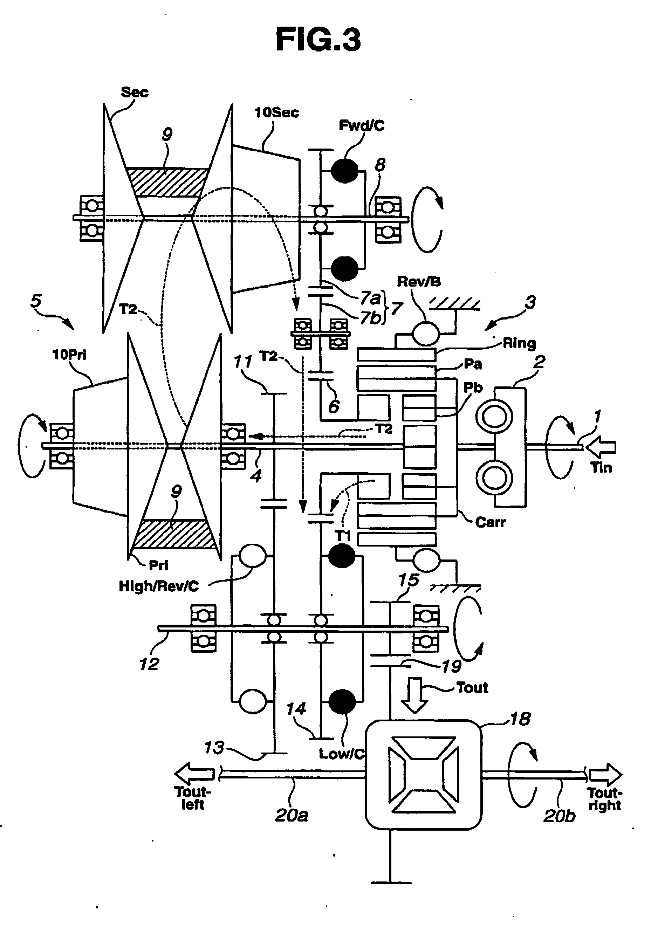

Firstly, there is discussed a torque transmission path (route) of the split type CVT set in the low mode with reference to Fig. 3. When the low mode is selected, high-speed/reverse clutch High/Rev/C is disengaged, low-speed clutch Low/C is engaged, forward clutch Fwd/c is engaged, and reverse brake Rev/B is disengaged. In Fig. 3, clutches and brakes put in engaged state are shown by mark ●**,** and those put in disengaged state are shown by mark ○.

In this selected low mode, engine torque Tin, which is inputted from crankshaft 1 through damper 2 to Ravigneaux planetary gearset 3, rotates carrier Carr. The rotation of carrier Carr rotates sun gears Sun1 and Sun2. During the disengaged state of reverse brake Rev/B (shown by mark ○ in Fig. 3). ring gear Ring is put in a racing state without transmitting the torque.

By the rotations of sun gears Sun1 and Sun2, engine torque Tin is split into a split torque T1 transmitted to sun gear Sun1 and a split torque T2 transmitted to sun gear Sun2 as shown by broken lines in Fig. 3. Split torque T2 transmitted to sun gear Sun2 moves V-belt 9 through primary pulley shaft 4 and primary pulley Pri.

In the low mode, the transmission ratio of variator 5, that is , a ratio of effective diameters of primary and secondary pulleys Pri and Sec is set at a ratio preferable for a low speed running. Therefore, the revolution speed of primary pulley Pri is set at a speed increased side, and the revolution speed of secondary pulley Sec is set at a speed decreased side.

split torque T2 transmitted to secondary pulley Sec is transmitted to gear 6 through secondary pulley shaft 8, forward clutch Fwd/C in engaged state (shown by mark ● in Fig. 3) and gearset 7. By this torque transmission path, the rotation of carrier Carr is returned to carrier Carr through sun gear Sun2, variator 5 and sun gear Sun1, and thereby circulating in the split type CVT. That is, the transmission ratio of variator 5 determines a relationship between the revolution speeds of sun gears Sun1 and Sun2.

As discussed above, split torque T2 transmitted to sun gear Sun2 is returned to sun gear Sun1 and is thus merged with split torque T1 transmitted to sun gear Sun1 at gear 6. This merged torque Tout is transmitted to gear 14. During the engagement of low-speed clutch Low/C (shown by mark ● in Fig. 3), output shaft 12 rotates together with gear 14 and thereby rotating the gear 15. Merged torque Tout is transmitted from gear 15 to the left and right driving wheels through ring gear 19, differential gear device 15 and left and right front drive shafts 20a and 20b.

when the low mode is selected, high-speed/reverse clutch High/Rev/C is disengaged (shown by mark ○ in Fig. 3). Therefore, gear 13 races without transmitting the torque.

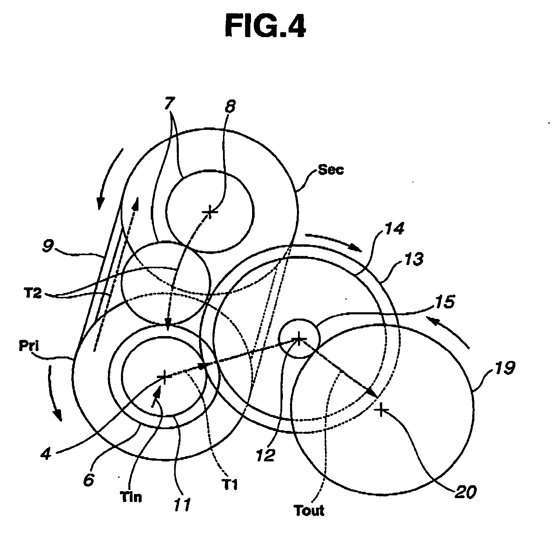

Fig. 4 shows an arrangement of the elements and the gears which construct a transaxle of the first embodiment, as viewed in the vehicle lateral direction. When the low mode is selected, engine torque Tin is split into split torques T1 and T2. Split torque T1 is directly transmitted to gear 6, and split torque T2 is transmitted to gear 6 through primary pulley Pri, secondary pulley Sec and gearset 7. Split torques T1 and T2 are merged at gear 6 and outputted as merged torque Tout to gear 14. Merged torque Tout is transmitted to a ring gear 19 under a deceleration state through gear 15.

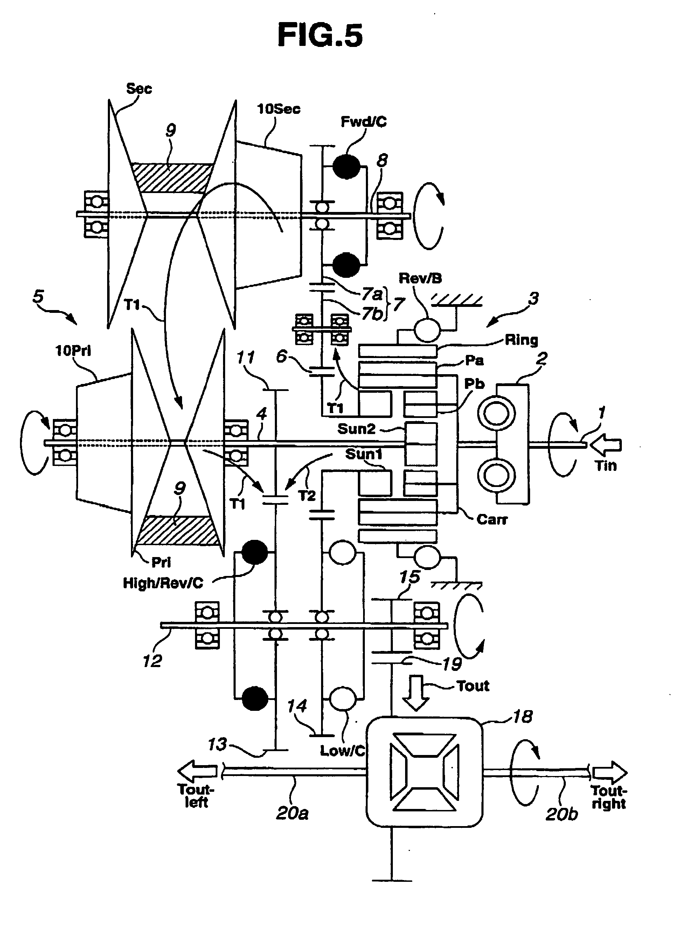

Fig. 5 shows the split type CVT in a high mode. When the high mode is selected, high-speed/reverse clutch High/Rev/C is engaged, low-speed cutch Low/C is disengaged, forward clutch Fwd/C is engaged, and reverse brake Rev/B is disengaged. In Fig. 5, clutches and brakes put in engaged state are shown by mark ●, and those put in disengaged state are shown by mark ○.

In the high mode, engine torque Tin, which is inputted from crankshaft 1 through damper 2 to Ravigneaux planetary gearset 3, rotates carrier Carr. The rotation of carrier Carr rotates sun gears Sun1 and Sun2. During the disengaged state of reverse brake Rev/B (shown by mark ○ in Fig. 3), ring gear Ring is put in a racing state without transmitting the torque.

By the rotations of sun gears Sun1 and Sun2, engine torque Tin is split into a split torque T1 transmitted to sun gear Sun1 and a split torque T2 transmitted to sun gear Sun2 as shown by continuous lines in Fig. 5. Split torque T1 transmitted to sun gear Sun1 is transmitted to secondary pulley shaft 8 through gear 6, gearset 7 and forward clutch Fwd/C putting the engaged state (shown by mark ● in Fig. 5). Split torque T1 is transmitted from secondary pulley shaft 8 to secondary pulley Sec, and moves v-belt 9 wound on secondary pulley Sec.

In the high mode, the transmission ratio of variator 5, that is, a ratio of effective diameters of primary and secondary pulleys Pri and Sec is set at a ratio preferable for a high speed running. Therefore, the revolution speed of primary pulley Pri is set at a speed decreased side, and the revolution speed of secondary pulley Sec is set at a speed increased side.

Split torque T1 is transmitted from V-belt 9 through primary pulley Pri to primary pulley shaft 4. Split torque T2 transmitted to sun gear Sun2 is also transmitted to primary pulley shaft 4.

As a result, split torques T1 and T2 merge at primary pulley shaft 4, and the merged torque Tout is transmitted to gear 11 installed at gear 11 fixed to primary pulley shaft 4. Merged torque Tout rotates gear 13 meshed with gear 11. When high-speed/reverse-clutch High/Rev/C is put in engaged state as shown by mark • in Fig. 5, output shaft 12 rotates together with gear 13, and gear 15 rotates. Merged torque Tout drives the left and right driving wheels through ring gear 19, differential gear device 18 and left and right front drive shafts 20a and 20b. When the high mode is selected, low-speed clutch Low/C is put in disengaged state as shown by mark ○ in Fig. 5, and therefore gear 14 races without transmitting the torque.

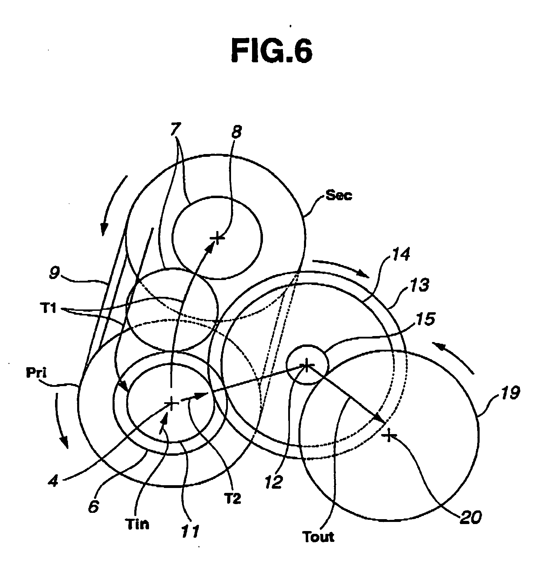

Fig. 6 shows an arrangement of elements and gears constructing the transaxle of the first embodiment, as viewed in the vehicle lateral direction. When the high mode is selected, engine torque Tin is split into split torques T1 and T2. Split torque T2 is transmitted to gear 11 through shaft 4, and split torque T1 is transmitted to gear 11 through gear 6, gearset 7, secondary pulley Sec, primary pulley Pri and shaft 4. Split torques T1 and T2 merge at shaft 4 and gear 11, and are outputted as merged torque Tout to gear 13. Merged torque Tout is transmitted to ring gear 19 set in a deceleration state through gear 15.

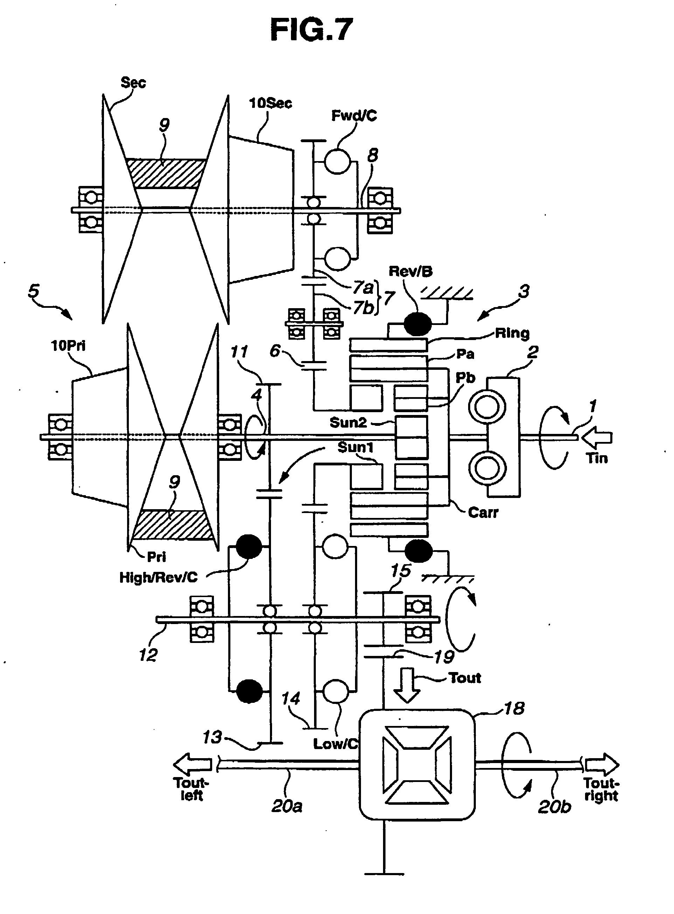

Subsequently, Fig. 7 shows the split type CVT put in the reverse mode according to the present embodiment. When the reverse mode is selected, high-speed/reverse clutch High/Rev/C is engaged, low-speed clutch Low/C is disengaged, forward clutch Fwd/C is disengaged, and reverse brake Rev/B is engaged. In Fig. 7, clutches and brakes put in engaged state are shown by mark ●, and those put in disengaged state are shown by mark ○.

In this reverse mode, engine torque Tin, which is inputted from crankshaft 1 through damper 2 to Ravigneaux planetary gearset 3, rotates carrier Carr. During the engaged state of reverse brake Rev/B (shown by mark ● in Fig. 7), ring gear Ring is put in a fixed state without transmitting the torque, and therefore sun gears Sun1 and Sun2 are rotated by the rotation of carrier Carr. During the disengaged state of forward clutch Fwd/C and low-speed clutch Low/C, sun gear Sun1 races without transmitting the torque.

By transmitting the rotation of carrier Carr to sun gear Sun1 put in a reverse rotation state, engine torque Tin is transmitted to sun gear Sun2 as shown by a continuous line in Fig. 7. Engine torque Tin transmitted to sun gear Sun2 is transmitted through primary pulley shaft 4 to gear 11 fixed to shaft 4. Accordingly, engine torque Tin is directly outputted as output torque Tout. Output torque Tout rotates gear 13 meshed with gear 11. When high-speed/reverse clutch High/Rev/C is put in the engaged state as shown by mark ● in Fig. 7, output shaft 12 rotates together with gear 13, and therefore gear 15 fixed to output shaft 12 rotates. Merged torque Tout is transmitted from gear 15 to the left and right driving wheels through ring gear 19, differential gear device 18 and left and right front drive shafts 20a and 20b and thereby driving the left and right driving wheels.

When the reverse mode is selected, low-speed clutch Low/C is disengaged as shown by mark ○ in Fig. 7, and therefore gear 14 races without transmitting the torque.

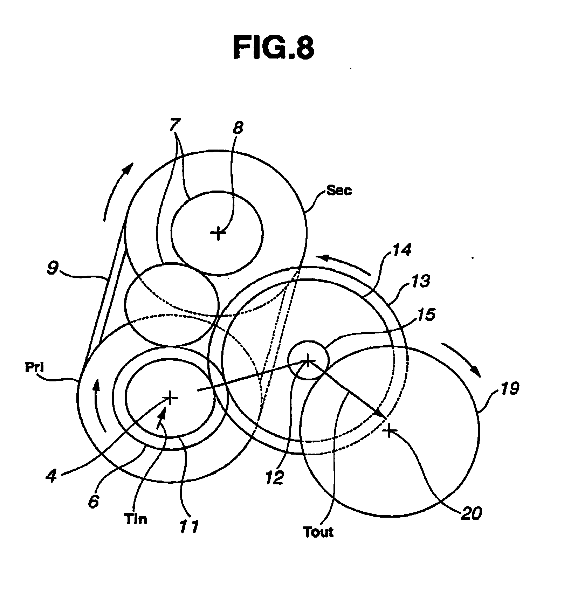

Fig. 8 shows an arrangement of elements and gears constructing the transaxle of the first embodiment, as viewed in the vehicle lateral direction. When the reverse mode is selected, engine torque Tin is transmitted to gear 11 through shaft 4 without being split. Engine torque Tin is directly transmitted to gear 13 as output torque Tout. Output torque Tout is transmitted to ring gear 19 put in a deceleration state through gear 15.

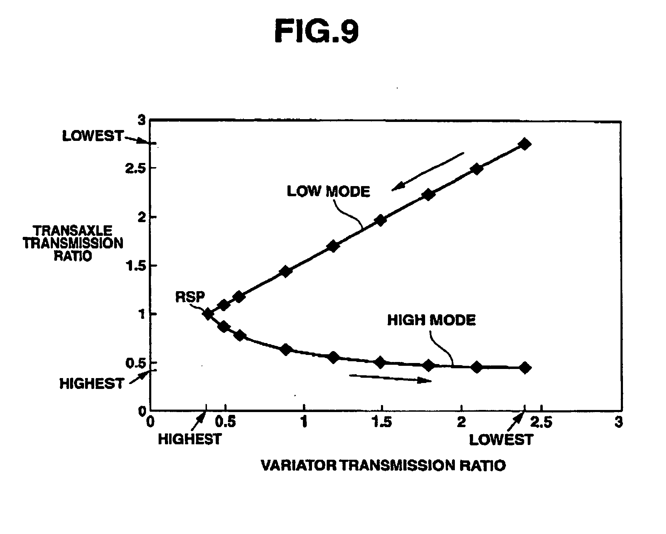

When one of the low mode and the high mode is selected, it is possible to define a value obtained by dividing the revolution speed of carrier Carr functioning as input element by the revolution speed of one of sun gears Sun1 and Sun2, as a transmission ratio of the transaxle according to the first embodiment of the present invention. Further it is possible to define a ratio between the revolution speed of primary pulley Pri and the revolution speed of secondary pulley Sec, as a transmission ratio of variator 5. Therefore, a relationship of the transaxle transmission ratio with respect to the variator transmission ratio is shown by a graph of Fig. 9.

As shown in Fig. 9, when the low mode is selected, a proportional relationship is established between the variator transmission ratio and the transaxle transmission ratio. That is, when variator 5 selects the maximum transmission ratio, the transaxle also selects the maximum transmission ratio. When a shift operation is executed as shown by the arrow shown in Fig. 9, the variator transmission ratio gradually decreases, and the transaxle transmission ratio also gradually decreases.

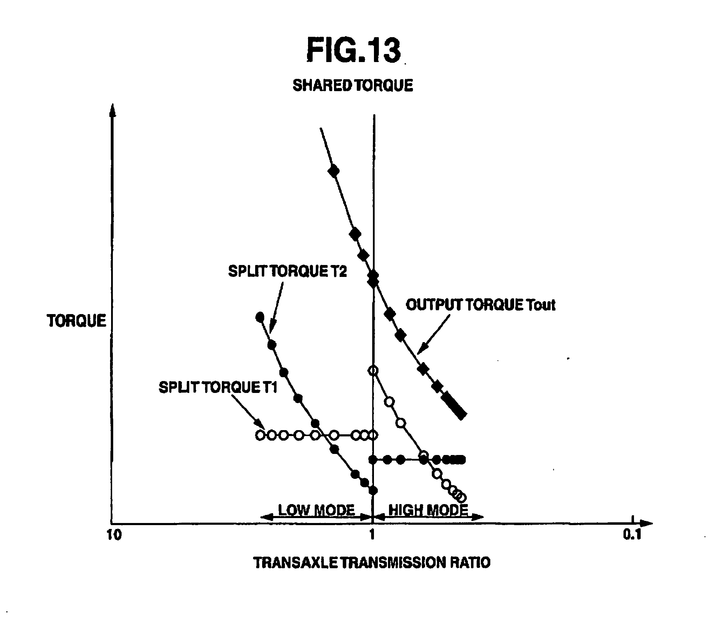

when an upshift operation is continued, the variator transmission ratio reaches the minimum transmission ratio, and the transaxle transmission ratio reaches 1. This reached condition is generally called a synchronous point (RSP). That is, a condition that the transaxle transmission ratio is 1 and the slip type CVT is put in the synchronous point, denotes that the revolution speed of gear 14 under a torque transmitting state is equal to the revolution speed of gear 13 under a racing state, as shown in Fig. 13. Therefore, at RSP, low-speed clutch Low/c in the engaged state is disengaged, and high-speed/reverse clutch High/Rev/C in the disengaged state is engaged to smoothly change a mode from the low mode to the high mode.

When the upshift operation is continued after the changeover to the high mode, the variator transmission ratio starts to increase, and the transaxle transmission ratio gradually decreases. Then, the variator transmission ratio reaches the maximum transmission ratio, and therefore the transaxle selects a minimum transmission ratio.

Fig. 10 shows a lever diagram showing the revolution speeds of the respective elements of the split type CVT in the low mode.

The elements of Ravigneaux planetary gearset 3 are represented in order of sun gear Sun2, ring gear Ring, carrier Carr and sun gear Sun1 on a horizontal axis of the lever diagram in Fig. 10. Distances among the elements on the horizontal axis are determined from the relative relationship among the numbers of teeth of the elements.

when the transaxle transmission ratio is maximum, it is denoted by LOWEST in Fig. 10. For the comparison, the revolution speeds of secondary and primary pulleys Sec and Pri are shown at the right hand side in Fig. 10. The revolution speed of gear 7b is shown at a position between planetary gearset 3 and variator 5.

When the split type CVT is put in the lowest state LOWEST and the revolution speed of carrier Carr, to which engine torque Tin is inputted, is 1000 [rpm], the revolution speed of sun gear Sun1, from which merged torque Tout is outputted, is 360 [rpm], the revolution speed of sun gear Sun2 is 2050 [rpm], and the revolution speed of ring gear Ring is 1500 [rpm] . The revolution speeds of the four elements, which are plotted on the lever diagram, are connected by a straight line (lever) due to the characteristic of Ravigneaux planetary gearset 3. When the revolution speed of one of the four elements is varied, the revolution speeds of the other of the four elements are also varied so that the revolution speeds of the four elements are always aligned on the straight line (lever). Accordingly, the relationship among the four elements of Ravigneaux planetary gearset 3 is represented by one lever on the lever diagram shown in Fig. 10.

From the meshed state of gears shown in Fig. 3 which shows the low mode, the revolution speed of sun gear Sun1 is correlated with the revolution speed of secondary pulley Sec, and the revolution speed of sun gear Sun 2 is correlated with the revolution speed of primary pulley Pri. That is, the revolution speeds of sun gears Sun1 and Sun2 are determined by the transmission ratio of variator 5.

When the transaxle transmission ratio is LOWEST, the variator transmission ratio becomes maximum (LOWEST). Therefore, the revolution speed of secondary pulley Sec is 850 [rpm], and the revolution speed of primary pulley Pri is 2100 [rpm]. When the revolution speeds of primary and secondary pulleys Pri and Sec are connected by a straight line as shown in Fig. 10, a gradient of the straight line denotes the variator transmission ratio, and is a maximum transmission ratio (LOWEST), which is a gradient rising radically and steadily from left to right.

Fig. 10 further shows a state that the trans axle transmission ratio is set at synchronous point RSP. At synchronous point RSP, the revolution speeds of sun gear Sun2, ring gear Ring, carrier Carr and sun gear Sun1 are equal to 1000 [rpm]. That is, the relationship among the four elements of Ravigneaux planetary gearset 3 at the synchronous point RSP is also represented by the lever which is horizontal in the lever diagram in Fig. 10. since the lever is horizontal, the transaxle transmission ratio is 1.

In this situation, the revolution speed of secondary pulley Sec is 2520 [rpm], and the revolution speed of primary pulley Pri is 1000 [rpm]. The gradient of the straight line connecting the revolution speeds of primary and secondary pulleys Pri and Sec denotes a minimum transmission ratio (HIGHEST) rising radically and steadily from right to left.

During the shift operation, the variator transmission ratio is continuously varied between LOWEST and HIGHEST. According to the continuous variation, the gradient of the lever is gradually varied between the two levers shown in Fig. 10. When the low mode is selected, the transaxle transmission ratio is varied by using a whole ratio width ranging from the maximum transmission ratio to the minimum transmission ratio of the variator transmission ratio.

Fig. 11 is a lever diagram showing the revolution speeds of the elements in the high mode selected condition. Since the synchronous point RSP is a transmission ratio at which the mode is switched between the high mode and the low mode, it is also shown in Fig. 11. A state that the transaxle transmission ratio is minimum is represented by HIGHEST and shown at the left hand side in Fig. 11. For the comparison, the revolution speeds of secondary and primary pulleys Sec and Pri are shown at the right hand side in Fig. 11. Further the revolution speed of gear 7b is shown at a position between the planetary gearset and the variator in Fig. 11.

When the transaxle transmission ratio is HIGHEST and the revolution speed of carrier Carr, to which engine torque Tin is inputted, is 1000 [rpm], the revolution speed of sun gear Sun2, from which the merged torque Tout is outputted, is 2050 [rpm]. Further, the revolution speed of sun gear Sun1 is 360 [rpm], and the revolution speed of ring gear Ring is 1500 [rpm]. The relationship among the revolution speeds of the four elements of Ravigneaux planetary gearset 3 are represented by one lever on the lever diagram in Fig. 11.

By varying the transmission ratio of variotor 5, the gradient of the lever is varied and therefore the shift operation is executed. When the transaxle transmission ratio is HIGHEST, the transmission ratio of variator 5 is the maximum transmission ratio (LOWEST).

When the high mode is selected, during the shift operation the variator transmission ratio is continuously varied between LOWEST and HIGHEST. According to this variation, the gradient of the levers is gradually varied between the two levers shown in Fig. 11. In addition, comparing the LOWEST selected condition shown in Fig. 10 and the HIGHEST selected condition in Fig. 11, the magnitudes of the revolution speeds of the four elements in Ravigneaux planetary gearset 3 are the same among them, and only the element functioning as an output is different therebetween. Even when the high mode is selected, the transaxle transmission ratio is varied using the whole ratio width from the maximum transmission ratio to the minimum transmission ratio of the variator transmission ratio.

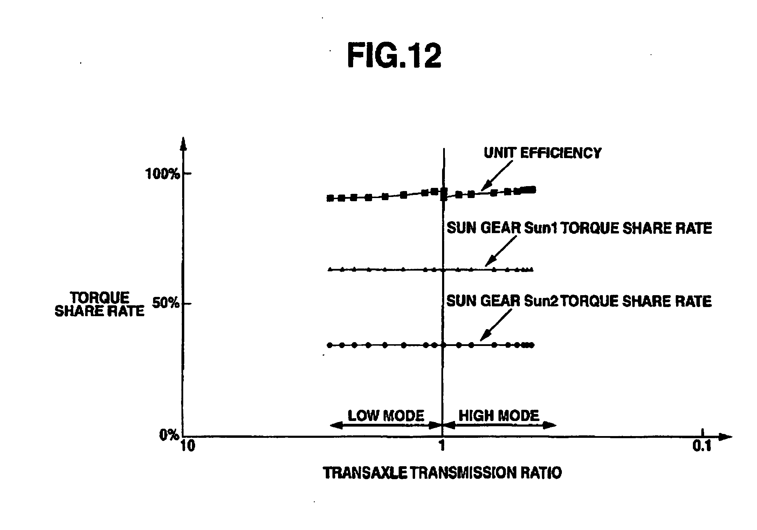

Fig. 12 is a graph showing the torque share rate of the torque of the split type CVT in the transaxle according to the first embodiment.

A torque share rate of sun gear Sun1 is almost 60% throughout the range of the transaxle transmission ratio, and a torque share rate of sun gear Sun2 is almost 30% throughout the range of the transaxle transmission ratio.

Further, a unit efficiency of the transaxle is also shown in Fig. 12. By executing a constant torque sharing, the total efficiency of the split type CVT becomes almost 90% in both of the low mode and the high mode. This achieves the high efficiency performing less friction loss.

Fig. 13 is a graph showing a torque share relationship of the split type CVT of the transaxle according to the first embodiment.

When the low mode is selected, split torque T2, which is transmitted from sun gear Sun2 through primary pulley Pri to secondary pulley Sec, decreases according to the upshift. Split torque Ti directly inputted to sun gear Sun1 is kept constant regardless of the upshift. Accordingly, merged torque Tout, which is the sum of split torques T1 and T2, decreases according to the upshift.

When the high mode is selected, split torque T1, which is transmitted from sun gear Sun1 through secondary pulley Sec to primary pulley Pri, decreases according to the upshift. Split torque T1, which was constant under the low mode, becomes discontinuous at synchronous point RSP, relative to the split torque in the high mode.

Split torque T2 directly inputted to sun gear Sun2 is kept constant regardless of the upshift. Split torque T2, which decreased under the low mode, becomes discontinuous at synchronous point RSP relative to the split torque constant in the low mode. Accordingly, merged torque Tout, which is the sum of split torques T1 and T2, decreased continuously from the low mode according to the upshift, and keeps the continuity even if put at synchronous point RSP.

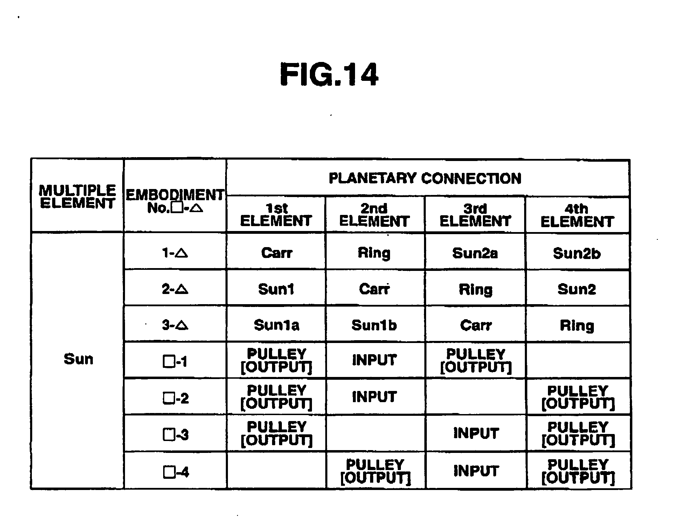

Subsequently, there is discussed other embodiments. Fig. 14 is a graph showing other embodiments.

The split type CVT according to the present invention can be embodied as various embodiments which function as a rotation transmitting mechanism of splitting torque input. As various embodiments,
an embodiment No. 1-Δ, an embodiment No. 2-Δ, and an embodiment 3-Δ shown as upper three embodiments in Fig. 14 can be embodied. Ravigneaux planetary gearset 3 of the first embodiment corresponds to that of the embodiment No. 2-Δ.

Each of the various embodiments shown at upper three embodiments shown in Fig. 14 employs a planetary gearset, which includes at least a carrier, a ring gear and a sun gear, and therefore comprises four elements by setting the sun gear into plural elements.

A first element, a second element, a third element and a four element of the rotation transmitting mechanism are in turn located on a horizontal axis of the lever diagram. A vertical axis denotes a revolution speed of each element, and the revolution speeds of the first through fourth elements are plotted on the lever diagram. The four elements are correlated so that one straight line (lever) is drawn as shown in Figs. 10 and 11 by connecting adjacent plots indicative of revolution speeds of the elements.

Each part Δ of the upper three embodiments in Fig. 14 is combined with lower four embodiments Nos. □-1, □-2, □-3 and □-4 in Fig. 14. By this combination, the part □ can take three patterns shown by the upper three embodiments in Fig. 14, and the part Δ can take four patterns shown by the lower four embodiments in Fig. 14. Therefore, twelve embodiments (3×4=12) such as the embodiment No. 1-1 or No. 3-4 are represented by Fig. 14. The first embodiment corresponds to the embodiment No. 2-2.

Each of the lower four embodiments shown in Fig. 14 is arranged so that the engine torque is inputted to an element located at an intermediate portion of a lever in a lever diagram, and is outputted from one of two elements located at both end portions of the lever in the lever diagram. In Fig. 14, an input element is denoted by [INPUT], and two elements capable of becoming an output element is denoted by [OUTPUT]. Two elements, which are located at both ends of the lever and connected to the variator, are denoted by [PULLEY]. In the various embodiments shown by the lower four embodiments in Fig. 14, an element connected to the variator also functions as an output element.

In the embodiments shown in Fig. 14, the embodiment No. □-1 is the best embodiment which can take the greatest ratio width, and the embodiment No. □-3 is the secondary best embodiment which can take the secondary greatest ratio width.

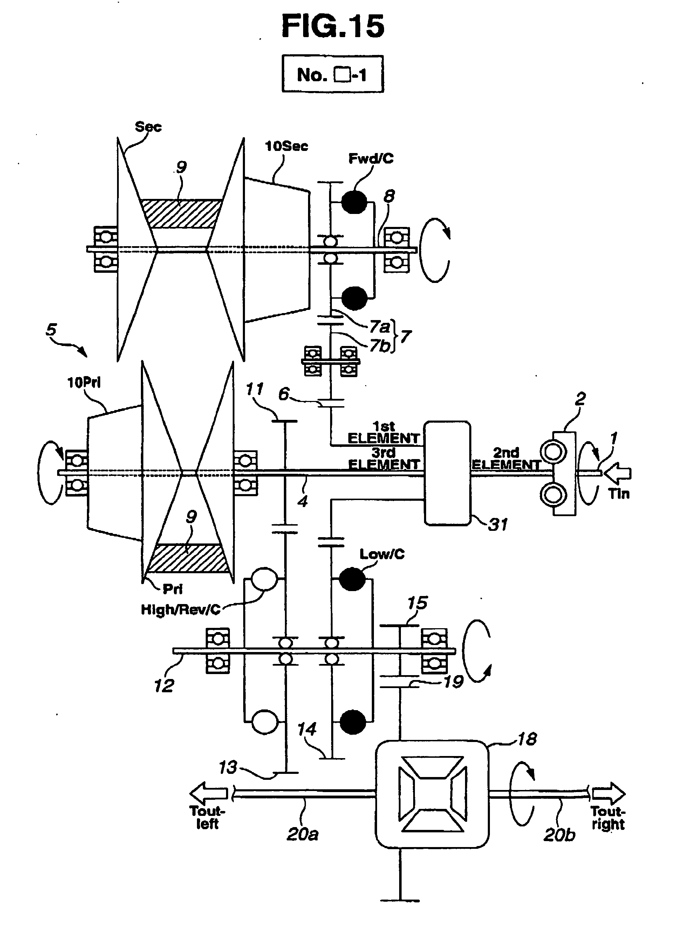

Fig. 15 is a skeleton diagram shown in the split type CVT of the embodiment No. □-1.

This split type CVT is also constructed as a transaxle for a front-engine front-drive vehicle (FF vehicle) wherein an internal combustion engine is transversely mounted in an engine compartment of the vehicle. This split type CVT comprises Ravigneaux planetary gearset 3 functioning as a rotation transmitting mechanism, variator 5 functioning as a continuously variable transmission mechanism, output shaft 12 and front driver shafts 20a and 20b. Parts same as those of the first embodiment are denoted by the same reference numerals and the explanation thereof is omitted herein. Parts different from those of the first embodiment are denoted by new reference numerals and are explained hereinafter.

In this embodiment, there is provided a rotation transmitting mechanism 31, which comprises a first element, a second element and a third element, instead of Ravigneaux planetary gearset 3 of the first embodiment. A fourth element is connected to none of rotating members shown in Fig. 15.

As discussed above, rotation transmitting mechanism 31 is at least arranged such that the revolution speeds of the three elements are represented by a lever on the lever diagram. One typical embodiment is a simple planetary gearset. That is, the first element, the second element and the third element are in turn located on the horizontal axis of the lever diagram. A vertical axis represents a revolution speed, and the revolution speeds of the first through third elements are plotted on the lever diagram. The three elements are correlated such that a straight line (lever) is drawn by connecting adjacent elements as shown in Figs. 11 and 12.

As shown in Fig. 15, the first element is connected to gear 6, the third element is connected to primary pulley shaft 4, and the second element is connected to damper 2.

In the embodiment shown in Fig. 15, the engine torque inputted from the second element to rotation transmitting mechanism 31 is split into two split torques. The two split torques are transmitted to the first element and the third element, respectively. When the low mode is selected, as is similar to the first embodiment shown in Fig. 3, the two split torques merge at gear 6 and is outputted to output shaft 12.

When the high mode is selected, as is similar to the first embodiment shown in Fig. 5, the split torques merge at primary pulley shaft 4, and is outputted to output shaft 12. Accordingly, with the thus arranged split type CVT according to this embodiment,
when one of the low mode and the high mode is selected, it becomes possible to decrease the torque passing through variator 5 throughout the speed range, and therefore it becomes possible to improve the durability and to save the weight of the transaxle.

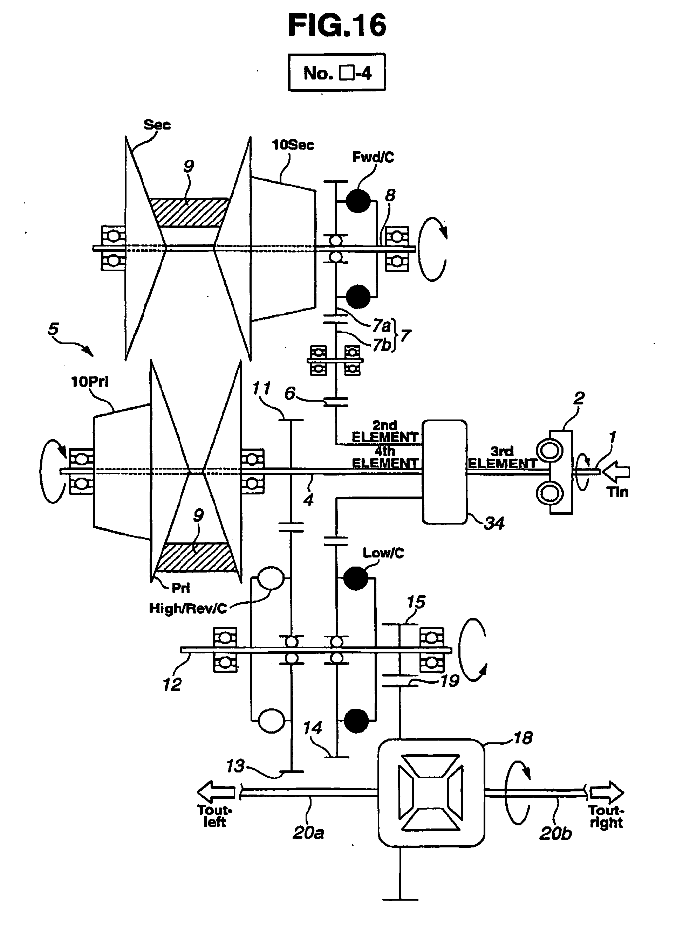

Fig. 16 is a skeleton diagram shown in the split type CVT of the embodiment No. □-4 shown in Fig. 14.

This split type CVT is also constructed as a transaxle which has a construction basically common with the transaxle shown in Figs. 1, 3, 5 and 15. Parts same as those of the first embodiment are denoted by the same reference numerals and the explanation thereof is omitted herein. Parts different from those of the first embodiment are denoted by new reference numerals and are explained hereinafter.

In this embodiment, there is provided a rotation transmitting mechanism 34 which comprises a first element, a second element, a third element and a fourth element. The first element is connected to a rotating member shown in Fig. 16.

As shown in Fig. 16, the second element is connected to gear 6, the fourth element is connected to primary pulley shaft 4, and the third element is connected to damper 2.

In the embodiment shown in Fig. 16, the engine torque inputted from the third element to rotation transmitting mechanism 34 is split into two split torques. The two split torques are transmitted to the second element and the fourth element, respectively. When the low mode is selected, as is similar to the first embodiment shown in Fig. 3, the two split torques merge at gear 6 and is outputted to output shaft 12.

When the high mode is selected, as is similar to the first embodiment shown in Fig. 5, the split torques merge at primary pulley shaft 4, and is outputted to output shaft 12. Accordingly, with the thus arranged split type CVT according to this embedment of the present invention, when one of the low mode and the high mode is selected, it becomes possible to decrease the torque passing through variator 5 throughout the speed range, and therefore it becomes possible to improve the durability and to save the weight of the system.

Since the embodiments No. □-1 through No. □-4 may be arranged such that rotation transmitting mechanism 31 or 34 comprises at least three elements, rotation transmitting mechanism 31 or 34 may be constructed by a simple planetary gearset which comprises a sun gear, a carrier and a ring gear. In case that rotation transmitting mechanism 31 or 34 is constructed by such a simple planetary gearset, it is necessary that the transaxle has a forward/reverse changeover mechanism.

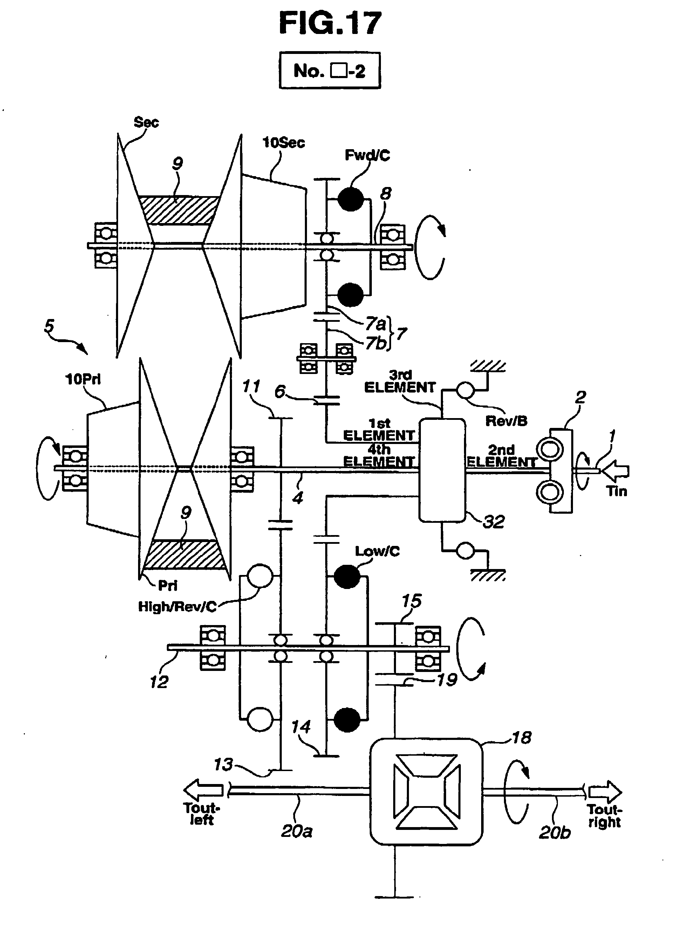

Fig. 17 is a skeleton diagram shown in the split type CVT of the embodiment No. □-2.

This split type CVT is also constructed as a transaxle which has a construction basically common with the transaxle shown in Figs. 1, 3, 5, 15 and 16. Parts same as those of the first embodiment are denoted by the same reference numerals and the explanation thereof is omitted herein. Parts different from those of the first embodiment are denoted by new reference numerals and are explained hereinafter.

In this embodiment, there is provided a rotation transmitting mechanism 32 which comprises a first element, a second element, a third element and a fourth element. Rotation transmitting mechanism 32 may be a Ravigneaux planetary gearset or a combination of two simple planetary gearsets.

As shown in Fig. 17, the first element is connected to gear 6, the fourth element is connected to primary pulley shaft 4, the second element is connected to damper 2, and the third element is connected to reverse brake Rev/B.

in the embodiment shown in Fig. 17, the engine torque inputted from the second element to rotation transmitting mechanism 32 is split into two split torques. The two split torques are transmitted to the first element and the fourth element, respectively. When the low mode is selected, as is similar to the first embodiment shown in Fig. 3, the two split torques merge at gear 6 and the merged torque is outputted to output shaft 12.

When the high mode is selected, as is similar to the first embodiment shown in Fig. 5, the split torques merge at primary pulley shaft 4, and the merged torque is outputted to output shaft 12. Accordingly, with the thus arranged split type CVT according to this embodiment, when one of the low mode and the high mode is selected, it becomes possible to decrease the torque passing through variator 5 throughout the speed range, and therefore it becomes possible to improve the durability and to save the weight of the system.

When the reverse mode is selected, reverse brake Rev/B is engaged, and therefore the input rotation of the second element is outputted inversely. This enables the execution of forward running and reverse running of the vehicle without newly providing a forward/backward changeover mechanism.

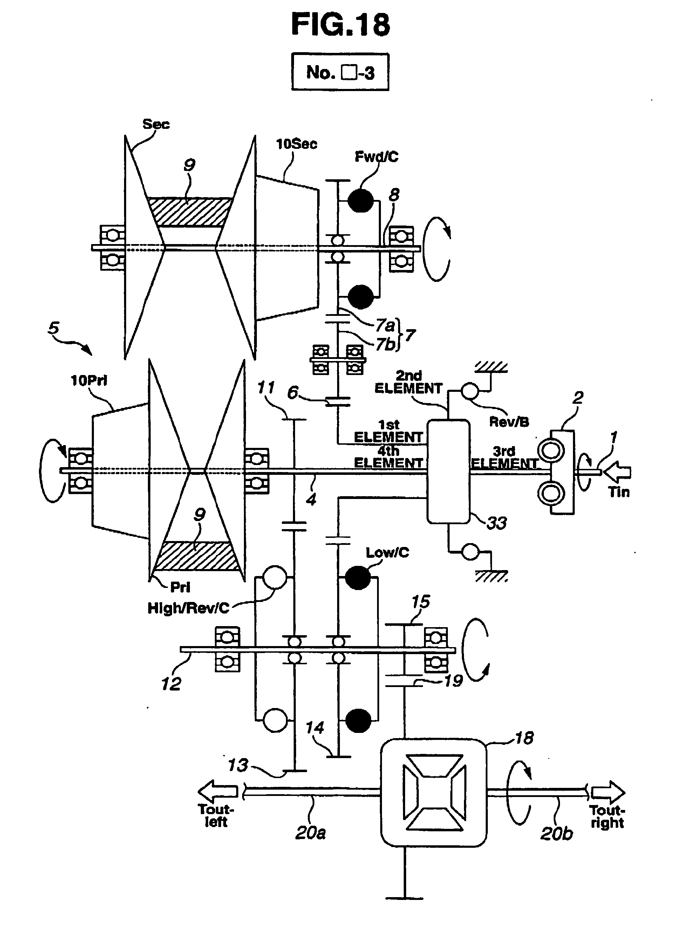

Fig. 18 is a skeleton diagram shown in the split type CVT of the embodiment No. □-3.

This split type CVT is also constructed as a transaxle which has a construction basically common with the transaxle shown in Figs. 1, 3, 5, 15, 16 and 17. Parts same as those of the first embodiment are denoted by the same reference numerals and the explanation thereof is omitted herein. Parts different from those of the first embodiment are denoted by new reference numerals and are explained hereinafter.

In this embodiment, there is provided a rotation transmitting mechanism 33 which comprises a first element, a second element, a third element and a fourth element. Rotation transmitting mechanism 33 may be a Ravigneaux planetary gearset or a combination of two simple planetary gearsets.

As shown in Fig. 18, the first element is connected to gear 6, the fourth element is connected to primary pulley shaft 4, the third element is connected to damper 2 and the second element is connected to reverse brake Rev/B.

In the embodiment shown in Fig. 18, the engine torque inputted from the third element to rotation transmitting mechanism 33 is split into two split torques. The two split torques are transmitted to the first element and the fourth element, respectively. When the low mode is selected, as is similar to the first embodiment shown in Fig. 3, the two split torques merge at gear 6 and the merged torque is outputted to output shaft 12.

When the high mode is selected, as is similar to the first embodiment shown in Fig. 5, the split torques merge at primary pulley shaft 4, and the merged torque is outputted to output shaft 12. Accordingly, with the thus arranged split type CVT according to this embodiment, when one of the low mode and the high mode is selected, it becomes possible to decrease the torque passing through variator 5 throughout the speed range, and therefore it becomes possible to improve the durability and to save the weight of the transaxle.

When the reverse mode is selected, reverse brake Rev/B is engaged, the input rotation of the second element is outputted inversely. This enables the execution of forward running and reverse running of the vehicle without newly providing a forward/backward changeover mechanism.

Subsequently, there is discussed other embodiments.

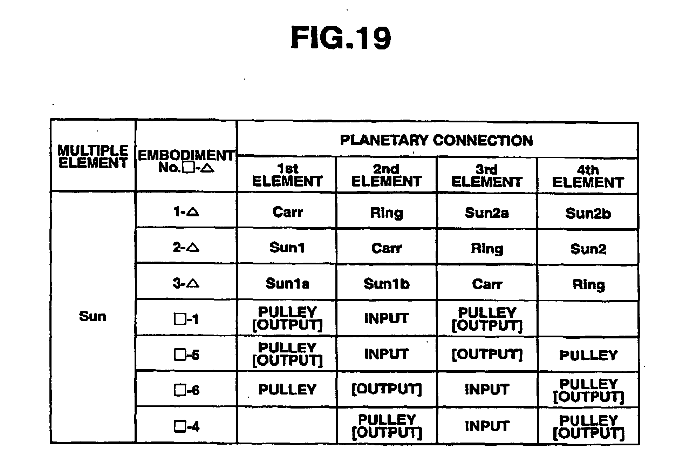

Fig. 19 is a graph showing other embodiments.

The split type CVT according to the present invention can be embodied as various embodiments which function as a rotation transmitting mechanism of splitting torque input. As various embodiments, Embodiments No. 1-Δ, No. 2-Δ, and No. 3-Δ shown at upper three in Fig. 19 are the same as those which have been discussed above.

Each part Δ of the upper three embodiments in Fig. 19 is combined with lower four embodiments Nos. □-1, □-5, □-6 and □-4 in Fig. 14. By this combination, the part □ can take three patterns shown by the upper three embodiments in Fig. 19, and the part Δ can take four patterns shown by the lower four embodiments in Fig. 14. Therefore, twelve embodiments (3×4=12) such as embodiment No. 1-1 or No. 3-5 are represented by Fig. 19. The embodiments No. □-1 and No. □-4 in Fig. 19 has been discussed above. If a combination of tables of Fig. 14 and Fig. 19 is represented into one table so as to show eighteen embodiments, large quantity of explanation is required. For convenience, only the embodiments No. □-1, No. □-5, No. □-6 and No. □-4 are shown in Fig. 19. Each of the lower four embodiments shown in Fig. 19 is arranged so that the engine torque is inputted to an element located at an intermediate portion of a lever in a lever diagram, and is outputted from one of two elements located at both end portions of the lever in the lever diagram.

These two elements functioning as output elements are connected with each other through variator 5. In the embodiments No. □-5 and No. □-6 shown in Fig. 19, the fourth element connected via variator 5 does not function as an output element, but one of the third and second elements, which are not connected by variator 5, functions as an output element. That is, the two elements, which are located at both ends of the lever of the lever diagram, has two meanings. One meaning is that they are one end element and the other end element. The other meaning is that they are an element near an end of the lever and an element near the other end of the lever, which are placed on opposite sides of an input element.

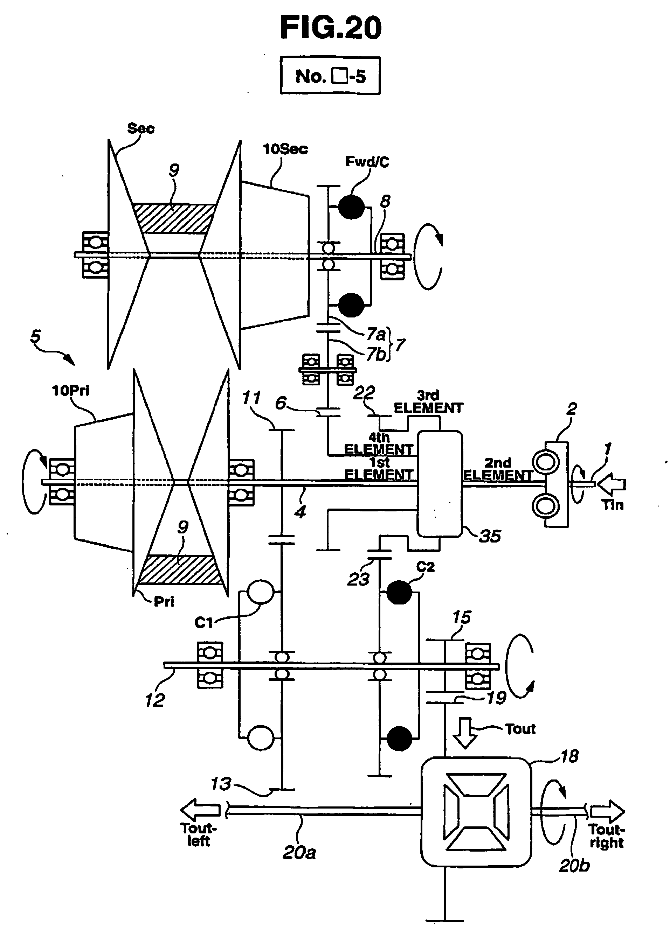

Fig. 20 is a skeleton diagram showing the split type CVT of the embodiment No. □-5.

This split type CVT is also constructed as a transaxle for a front-engine front-drive vehicle (FF vehicle) wherein an internal combustion engine is transversely mounted in an engine compartment of the vehicle. This split type CVT comprises a rotation transmitting mechanism 35 constructed by a planetary gearset, variator 5 functioning as a continuously variable transmission mechanism, an output shaft 12 and front driver shafts 20a and 20b. Parts same as those of the first embodiment are denoted by the same reference numerals and the explanation thereof is omitted herein. Parts different from those of the first embodiment are denoted by new reference numerals and are explained hereinafter.

In this embodiment, there is provided the rotation transmitting mechanism 35, which comprises a first element, a second element, a third element and a fourth element, instead of Ravigneaux planetary gearset 3 of the first embodiment. Rotation transmitting mechanism 35 is at least arranged such that the revolution speeds of the four elements are represented by a lever on the lever diagram. That is, rotation transmitting mechanism 35 may be a Ravigneaux planetary gearset or a combination of two simple planetary gearsets. More specifically, the first element, the second element, the third element and the fourth element are in turn located on the horizontal axis of the lever diagram. A vertical axis represents a revolution speed, and the revolution speeds of the first through fourth elements are plotted on the lever diagram. The four elements are correlated such that a straight line (lever) is drawn by connecting adjacent elements as shown in Figs. 10 and 11.

As shown in Fig. 20, the second element is connected to damper 2, the first element is connected to primary pulley shaft 4, and the fourth element is connected to gear 6.

The third element is connected to a gear 22 which is coaxially arranged with gears 6 and 11, and primary pulley Pri, and which mashes with a gear 23 coaxially supported by output shaft 12. A second clutch C2 is interposed between output shaft 12 and gear 23. When second clutch C2 is disengaged, gear 23 is disengaged from output shaft 12 so as not to transmit a torque from gear 23 to output shaft 12. When second clutch C2 is engaged, gear 23 is fixedly connected to output shaft 12 so as to transmit the torque from gear 23 to output shaft 12.

In the embodiment shown in Fig. 20, high-speed/reverse clutch High/Rev/C of the first embodiment shown in Fig. 1 is called a first clutch C1. Further, the embodiment shown in Fig. 20 does not comprises gear 14 and low-speed clutch Low/C of the first embodiment shown in Fig. 1.

There is discussed an operation of the embodiment shown in Fig. 20.

When a first mode for forward running is selected, forward clutch Fwd/C and first clutch C1 are engaged, and second clutch C2 is disengaged. By this connection state, the engine torque inputted from the second element to rotation transmitting mechanism 35 is split into two split torques. The two split torques are transmitted to the first element and the fourth element, respectively. The split torque transmitted to the fourth element is transmitted to gear 11 through gearset 7, shaft 8 and variator 5. On the other hand, the split torque transmitted to the first element is transmitted to gear 11 through shaft 4. The two split torques merge at gear 11, and the merged torque is outputted to output shaft 12.

When a second mode for forward running is selected, forward clutch Fwd/C and second clutch C2 are engaged as shown by mark ● in Fig. 20, and first clutch C1 is disengaged as shown by mark ○ in Fig. 20.

By this connection state, the engine torque inputted from the second element in rotation transmitting mechanism 35 is split into two split torques. The two split torques are transmitted to the third element and the fourth element, respectively. The split torque transmitted to the fourth element is transmitted to the third element through gearset 7, shaft 8, variator 5, shaft 4, and the first element. This torque transmitting path may be recognized such that the split torque split at the second element is transmitting to the first element, and inversely reaches from the first element to the third element through the fourth element. The two split torques merge at the third element, and the merged torque is outputted from output shaft 12.

With the thus arranged split type CVT according to the embodiment, when one of the first mode and the second mode is selected, it becomes possible to decrease the torque passing through variator 5 throughout the speed range, and therefore it becomes possible to improve the durability and to save the weight of the transaxle. According to the limitation in design, one of the first and second modes may be set at a low mode, and the other may be set at a high mode.

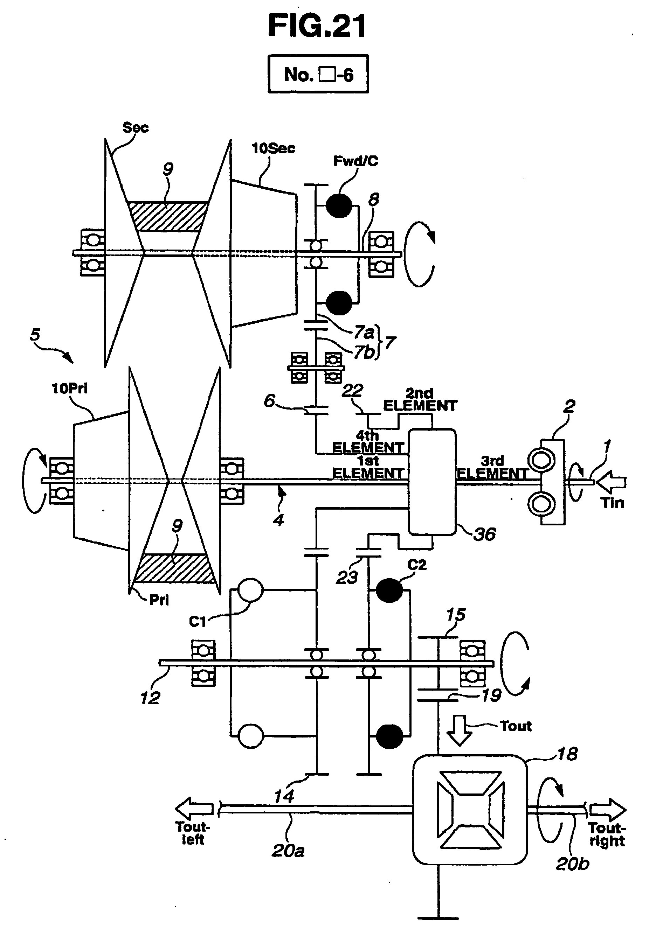

Fig. 21 is a skeleton diagram shown in the split type CVT of the embodiment No. □-6.

This split type CVT is also constructed as a transaxle which has a construction basically common with the transaxle shown in Fig. 20. Parts same as those of the first embodiment are denoted by the same reference numerals and the explanation thereof is omitted herein. Parts different from those of the first embodiment are denoted by new reference numerals and are explained hereinafter.

In this embodiment, there is provided a rotation transmitting mechanism 36 which comprises a first element, a second element, a third element and a fourth element. Rotation transmitting mechanism 36 may be a Ravigneaux planetary gearset or a combination of two simple planetary gearsets.

As shown in Fig. 21, the third element is connected to damper 2, the fourth element is connected to gear 6, the first element is connected to primary pulley shaft 4, and the second element is connected to gear 22. Gear 6 meshes with gearset 7 and a gear 14, which is coaxially provided on output shaft 12. First clutch C1 is interposed between output shaft 12 and gear 14. When first clutch C1 is engaged, output shaft 12 integrally rotates with gear 14.

There is discussed an operation of the embodiment shown in Fig. 21 in accordance with the present invention.

When a first mode for forward running is selected, forward clutch Fwd/C and first clutch C1 are engaged, and second clutch C2 is disengaged. By this connection state, the engine torque inputted from the third element to rotation transmitting mechanism 36 is split into two split torques at gear 6. The two split torques are transmitted to the first element and the fourth element, respectively. The split torque transmitted to the first element is transmitted to gear 14 through shaft 4, variator 5, shaft 8, gearset 7 and gear 6. On the other hand, the split torque transmitted to the fourth element is transmitted to gear 14 through gear 6. The two split torques merge at gear 14, and the merged torque is outputted to output shaft 12.

When a second mode for forward running is selected, forward clutch Fwd/C and second clutch C2 are engaged as shown by mark ● in Fig. 21, and first clutch C1 is disengaged as shown by mark ○ in Fig. 21). By this connection state, the engine torque inputted from the third element to rotation transmitting mechanism 36 is split into two split torques. The two split torques are transmitted to the second element and the fourth element, respectively. The split torque transmitted to the fourth element is transmitted to the second element through gear 6, gearset 7, shaft 8, variator 5, shaft 4 and the first element. On the other hand, the split torque transmitted to the second element merges with the split torque transmitted to the fourth element at the second element, and the merged torque is outputted to output shaft 12 through gear 22 and gear 23.

With the thus arranged split type CVT according to the embodiment, when one of the first mode and the second mode is selected, it becomes possible to decrease the torque passing through variator 5 throughout the speed range, and therefore it becomes possible to improve the durability and to save the weight of the transaxle. According to the limitation in design, one of the first and second modes may be set at a low mode, and the other may be set at a high mode.

Subsequently there is discussed other embodiments.

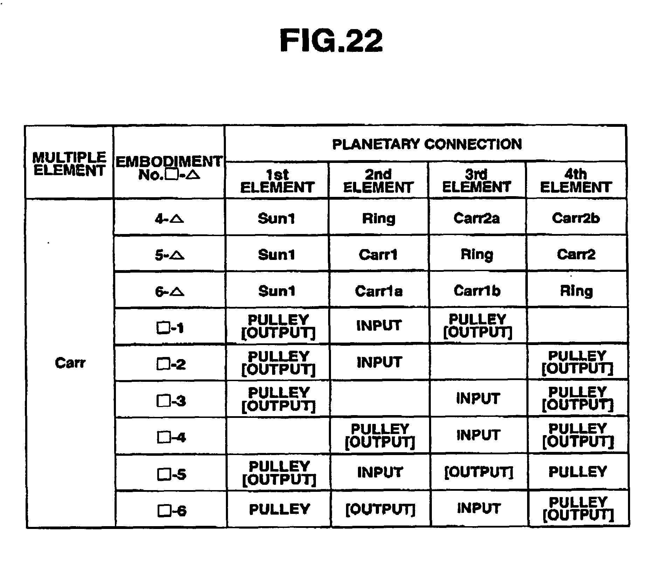

Fig. 22 is a graph showing the split type CVT according to other embodiments.

The embodiments No. 4-Δ, No. 5-Δ, and No. 6-Δ shown at upper three in Fig. 22 employ a planetary gearset which comprises at least a carrier, a ring gear and a sun gear. By constructing the carrier into the plural elements, the planetary gearset comprises four elements.

Each part Δ of the upper three embodiments in Fig. 22 is combined with lower six embodiments Nos. □-1, □-2, □-3, □-4, □-5 and D-6 in Fig. 22. By this combination, the part □ can take three patterns shown by the upper three embodiments in Fig. 22, and the part Δ can take six patterns shown by the lower six embodiments in Fig. 22. Therefore, eighteen embodiments (3×6=18) such as embodiments No. 4-1 or No. 6-4 are represented by Fig. 22.

The embodiments No. □-1 through No. □-6 shown at lower side in Fig. 22 are the same as those discussed in Figs. 14 and 19. The selection of output is executed by properly disengaging and engaging brakes and clutches of the rotation transmitting mechanism.

Subsequently there is discussed other embodiments.

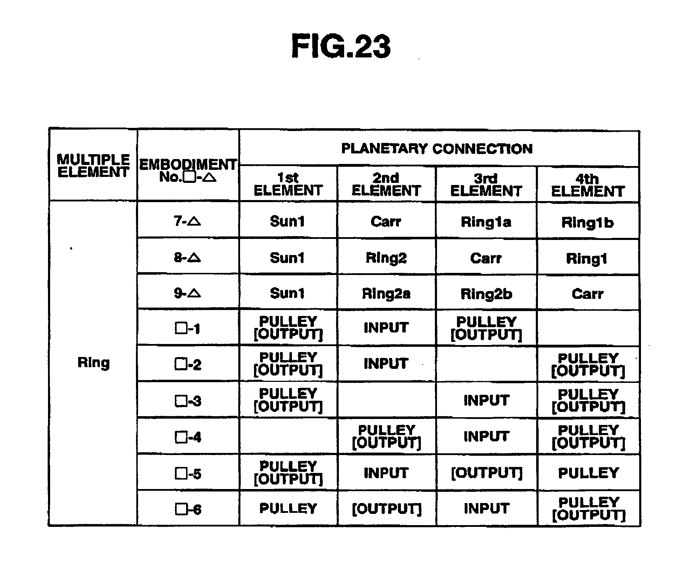

Fig. 23 is a graph showing other embodiments. The embodiments No. 7-Δ, No. 8-Δ, and No. 9-Δ shown at upper three in Fig. 23 employ a planetary gearset which comprises at least a carrier, a ring gear and a sun gear. By constructing the carrier into the plural elements, the planetary gearset comprises four elements.

Each part Δ of the upper three embodiments in Fig. 23 is combined with lower six embodiments Nos. □-1, □-2, □-3, □-4, □-5 and □-6 in Fig. 23. By this combination, the part D can take three patterns shown by the upper three embodiments in Fig. 23, and the part Δ can take six patterns shown by the lower six embodiments in Fig. 23. Therefore, eighteen embodiments (3×6=18) such as embodiments No. 7-1 or No. 9-4 are represented by Fig. 23.

The embodiments No. □-1 through No. □-6 shown at lower side in Fig. 23 are the same as those discussed in Figs. 14 and 19. The selection of output is executed by properly disengaging and engaging brakes and clutches of the rotation transmitting mechanism. In the embodiments shown in Fig. 23, the embodiment 8-2 has the most preferable embodiment which can take the largest ratio width.

Returning to the explanation of the first embodiment, the transaxle of the first embodiment comprises Ravigneaux planetary gearset 3 in which carrier Carr, large-diameter sun gear Sun1, small-diameter sun gear Sun2 and ring gear Ring are provided such that the revolution speeds thereof are represented by one lever on the lever diagram in Figs. 10 and 11. Carrier Carr located at an intermediate portion of the lever functions as an input element, and receives an input rotation from damper 2. One of sun gears Sun1 and Sun2, which are located at opposite sides of the input element and at both ends of the lever, outputs the rotation.

When the selected mode is the low mode shown in Fig. 3 or the high mode shown in Fig. 5, input torque Tin inputted to carrier Carr is split. One of the split torque is transmitted from carrier Carr in Ravigneaux planetary gearset 3 to the sun gear. Sun gears Sun1 and Sun2 are connected by V-belt type variator 5, which is capable of continuously varying the transmission ratio. The other split torque is transmitted through variator 5. The above-discussed split of the torque is executed in the embodiments shown in Fig. 14, 19, 22 and 23.

With the thus arranged split type CVT, which is capable of splitting and transmitting torque in the whole speed range from a low speed to a high speed, it becomes possible to decrease the torque passing through V-belt type variator 5 and to improve the durability of variator 5. Further it is possible to decrease the weight of vairator 5, as compared with a conventional V-belt type CVT or a toroidal transmission unit in an infinite transmission ratio CVT. This largely contributes to decreasing the size of the transaxle. Further it becomes possible to decrease a clamp pressure of V-belt 9 as compared with that of the conventional CVT. This decreases the operation pressure supplied to piston chambers 10Pri and 10Sec, thereby contributing to improving the fuel consumption.

In each embodiment as shown in Figs. 14, 19, 22 and 23, one of the second and third elements is employed as an input element. One of two elements, which are located at both ends of the lever and at opposite sides of the input element, is employed as an output element. For example, in case of the embodiment No. □-1, in which the second element is employed as an input element, one of the first element and the third element is employed as an output element. In case of the embodiments No. □-2 and No. □-5 in which the second element is employed as an input element, one of the first element and the fourth element is employed as an output element.

Representatively explaining the first embodiment, a ratio between the revolution speed of carrier Carr and the revolution speed of the first element or third element employed as an output element is a transmission ratio (transaxle transmission ratio) of the split type CVT constructing the transaxle.

When the transaxle transmission ratio is greater than a predetermined value such as 1, at which the point becomes the synchronous point RSP, the low mode is executed such that the output torque Tout is outputted from sun gear Sun1 which is one of the two elements located at both ends of the lever. On the other, when the transaxle transmission ratio is smaller than the predetermined value such as 1, the high mode is executed such that the output torque Tout is outputted from sun gear Sun2 which is one of two element located at both ends of the lever.

As discussed above, when one of the low mode shown in Fig. 10 and the high mode shown in Fig. 11 is executed, it is possible to vary the transmission ratio of variator 5 in the whole ratio width. As a result, it becomes possible to increase the ratio width of the transaxle transmission ratio as compared with a case that a transmission ratio of a V-belt CVT is directly employed as a transaxle transmission ratio. If the ratio width of the transaxle according to the present invention is maintained at a conventional ratio, it becomes possible to decrease the transmission ratio of variator 5. This contributes to decrease the weight of variator 5 and to decrease the size of the transaxle.

According to the present invention, when the transaxle transmission ratio takes the predetermined value 1 of the synchronous point RSP, the variator transmission ratio is set at the synchronous transmission ratio RSP which is the minimum transmission ratio so as to equalize the revolution speeds of sun gears Sun1 and Sun2, which are objects selected as an output element. When the variator transmission ratio is the synchronous transmission ratio RSP corresponding to the minimum transmission ratio, the engagement and disengagement of the clutches High/Rev/C and Low/C are executed to changeover the output element. By this changeover operation, the mode is smoothly changed between the high mode and the low mode.

In the embodiments No. □-2 and No. □-3, four elements construct rotation transmitting mechanism 32, 33. Brake Rev/B for stopping the rotation of the element is attached to one of the second and third elements, which is located at intermediate portions of the lever as shown in Figs. 17 and 18, and which is different from an input element. Therefore, it is possible to execute the reverse mode, and it becomes possible that the vehicle executes forward running and reverse running using one rotation transmitting mechanism. This arrangement does not require a forward/reverse changeover mechanism and thereby providing a cost advantage.

Further, if a Ravigneaux planetary gearset is employed as rotation transmitting mechanisms 31 through 36, it becomes possible to decrease the size and weight of the rotation transmitting mechanisms 31 through 36.

In the first embodiment shown in Fig. 1, carrier Carr of Ravigneaux planetary gearset 3 functions as an input element located at an intermediate portion of the lever. The pinion gears supported by carrier Carr are double pinion gears Pa and Pb. Pinion gears Pa mesh with large-diameter sun gear Sun1, and pinion gears Pb mesh with small-diameter sun gear Sun2. Sun gears Sun1 and Sun2 are used as two elements located at both ends of the lever. Clutch Low/c is provided so as to be capable of selecting one of the two elements as an output. Reverse brake Rev/B is attached to ring gear Ring, which is a remaining element of the four elements of Ravigneaux planetary gearset 3. Therefore, it becomes possible to provide the best mode embodiment which is capable of setting the ratio width of the transaxle at the maximum value relative to the ratio width of variator 5.

## Claims

1. Split type continuously variable transmission (CVT) comprising:
a rotation transmitting mechanism (3) comprising a plurality of rotating elements (Carr, Sun1, Sun2, Ring) among which rotation and torque are transmitted, revolution speeds of the rotating elements (Carr, Sun1, Sun2, Ring) being represented by a lever in a lever diagram, the rotating element (Carr) located at an intermediate portion of the lever being employed as an input element of receiving an input rotation , one of the two rotating elements (Sun1, Sun2), which are located at both end portions of the lever and at opposite sides of the input element, being employed as an output element of outputting an output rotation so that a first torque transmission path of transmitting a torque is produced between the input and output elements (Carr, Sun1, Sun2) in the rotation transmission mechanism (3); and
a continuously variable transmission (CVT) mechanism (5) continuously varying a CVT mechanism transmission ratio, the CVT mechanism (5) being connected to the two rotating elements (Sun1, Sun2) located at both end portions of the lever so that a second transmission path of transmitting the torque is produced between the input and output elements through the CVT mechanism (5), **characterized in that**
the rotation transmission mechanism (3) comprises four rotating elements (Carr, Sun1, Sun2, Ring), a brake (Rev/B) being attached to a rotating element (Ring) for stopping a rotation of this rotating element (Ring), which is one of two rotating elements (Carr, Ring) located at an intermediate portion of the lever, and which is different from the input element (Carr).

2. Split type CVT according to claim 1, **characterized in that** the rotation transmitting mechanism (3) includes a Ravigneaux planetary gearset (3).

3. Split type CVT according to claim 2, **characterized in that** the Ravigneaux planetary gearset (3) comprises inner pinion gears (Pb) and outer pinion gears (Pa) which are supported by a carrier (Carr) and which are engaged respectively with two sun gears (Sun1, Sun2), the carrier (Carr) being employed as the input element, the two sun gears (Sun1, Sun2) being the two rotating elements which are located at both end portions of the lever, one of which being selected as the output element.

4. Split type CVT according to one of the claims 1 to 3, **characterized by** further comprising a clutch device (High/Rev/C, Low/C) which is selectively put in an engaged and a disengaged state to select one (Sun1) of the two rotating elements (Sun1, Sun2) located at both end portions of the lever as the output element by a changeover of the state of the clutch device (High/Rev/C, Low/C) when a split type CVT transmission ratio represented by a ratio between a revolution speed of the input element (Carr) and a revolution speed of the output element (Sun1, Sun2) is higher than a predetermined value and to select the other (Sun2) of the two rotating elements (Sun1, Sun2) as the output element by the changeover of the state of the clutch device (High/Rev/C, Low/C) when the split type CVT transmission ratio is smaller than the predetermined value.

5. Slit type CVT according to claim 4, **characterized in that** the CVT mechanism transmission ratio is set at a synchronous transmission ratio (RSP) so that the revolution speed of the one of the two rotating elements (Sun1, Sun2) located at both end portions of the lever is equal to the revolution speed of the other of the two rotating elements (Sun1, Sun2) when the split type CVT transmission ratio is equal to the predetermined value, and a changeover of the output element is executed between the two rotating elements (Sun1, Sun2) located at both end portions of the lever when the CVT mechanism transmission ratio is equal to the synchronous transmission ratio (RSP).

6. Split type CVT according to one of the claims 1 to 3, **characterized by** further comprising a clutch device (High/Rev/C, Low/C) which is selectively engaged and disengaged to select one of the two rotating elements (Sun1, Sun2) located at both end portions of the lever, a low mode executing section which selects one (Sun1) of the two rotating elements (Sun1, Sun2) located at both end portions of the lever as the output element by controlling the clutch device when a split type CVT transmission ratio represented by a ratio between a revolution speed of the input element (Carr) and a revolution speed of the output element (Sun1, Sun2) is higher than a predetermined value, and a high mode executing section which selects the other (Sun2) of the two rotating elements (Sun1, Sun2) as the output element by controlling the clutch device when the split type CVT transmission ratio is smaller than the predetermined value.

7. Split type CVT according to claim 6, **characterized by** further comprising a shift controlling section which brings the CVT mechanism transmission ratio to a synchronous transmission ratio (RSP) so that the revolution speed of the one (Sun1) of the two rotating elements (Sun1, Sun2) located at both end portions of the lever is equal to the revolution speed of the other (Sun2) of the two rotating elements (Sun1, Sun2) when the split type CVT transmission ratio is equal to the predetermined value, and a mode changeover section which executes a changeover of the output element between the two rotating elements (Sun1, Sun2) located at both end portions of the lever when the CVT mechanism transmission ratio is equal to the synchronous transmission ratio (RSP).

8. Split type CVT according to one of the claims 1 to 7, **characterized in that** the rotation transmission mechanism (3) receives the input rotation through a damper (2).

9. Split type CVT according to one of the claims 4 to 7, **characterized in that** the output element (Sun1, Sun2) is connected to an output shaft (12) through the clutch device (High/Rev/C, Low/C).

## Patentansprüche

1. Stufenlos veränderbares Getriebe (CVT) vom verzweigten Typ, aufweisend:
eine Rotations- Getriebevorrichtung (3), die eine Mehrzahl von Rotationselementen (Carr, Sun1, Sun2, Ring) aufweist, zwischen denen die Drehung und das Drehmoment übertragen werden, wobei die Drehzahlen der Rotationselemente (Carr, Sun1, Sun2, Ring) durch einen Hebel in einem Hebeldiagramm repräsentiert werden, das Rotationselement (Carr), angeordnet an einem Zwischenabschnitt des Hebels, als ein Eingangselement zum Aufnehmen einer Eingangsdrehung verwendet wird, eines der zwei Rotationselemente (Sun1, Sun2), die an beiden Endabschnitten des Hebels und auf gegenüberliegenden Seiten des Eingangselementes angeordnet sind, als ein Ausgabeelement zum Ausgeben einer Ausgangsrotation verwendet wird, so dass der erste Drehmomentpfad des Übertragens eines Drehmomentes zwischen den Eingangs- und Ausgangselementen (Carr, Sun1, Sun2) in der Rotations- Getriebevorrichtung (3) erzeugt wird, und
eine stufenlos veränderbare Getriebe- (CVT) Vorrichtung (5), die stufenlos ein CVT- Vorrichtungs- Übersetzungsverhältnis verändert, wobei die CVT- Vorrichtung mit den zwei Rotationselementen (Sun1, Sun2), angeordnet an beiden Endabschnitten des Hebels, verbunden ist, so dass ein zweiter Getriebepfad der Übertragung des Drehmomentes zwischen den Eingangs- und Ausgangselementen durch die CVT- Vorrichtung (5) erzeugt wird, **dadurch gekennzeichnet, dass**
die Rotations- Getriebevorrichtung (3) vier Rotationselemente (Carr, Sun1, Sun2, Ring) aufweist, eine Bremse (Rev/B), die mit einem Rotationselement (Ring) verbunden ist zum Stoppen einer Drehung dieses Rotationselements (Ring), das eines der zwei Rotationselemente (Carr, Ring) ist, angeordnet an einem Zwischenabschnitt des Hebels und das von dem Eingangselement (Carr) verschieden ist.

2. Stufenlos veränderbares Getriebe vom verzweigten Typ nach Anspruch 1, **dadurch gekennzeichnet, dass** die Rotations- Getriebevorrichtung (3) einen Ravigneaux- Planetenradsatz (3) enthält.

3. Stufenlos veränderbares Getriebe vom verzweigten Typ nach Anspruch 2, **dadurch gekennzeichnet, dass** der Ravigneaux- Planetenradsatz (3) innere Ritzelzahnräder (Pb) und äußere Ritzelzahnräder (Pa) aufweist, die durch einen Träger (Carr) getragen werden, und die jeweils mit zwei Sonnenrädern (Sun1, Sun2) im Eingriff sind, wobei der Träger (Carr) als das Eingangselement verwendet wird, die zwei Sonnenräder (Sun1, Sun2) die zwei Rotationselemente sind, die an beiden Endabschnitten des Hebels angeordnet sind, wobei eines von ihnen als das Ausgangelement ausgewählt wird.

4. Stufenlos veränderbares Getriebe vom verzweigten Typ nach einem der Ansprüche 1 bis 3, **gekennzeichnet durch** außerdem aufweisend eine Kupplungsvorrichtung (High/Rev/C, Low/C), die wahlweise in den Eingriffs- oder einen Außer-Eingriffs- Zustand gebracht wird, um eines (Sun1) der zwei Rotationselemente (Sun1, Sun2) auszuwählen, angeordnet an beiden Endabschnitten des Hebels als das Ausgangselement **durch** ein Umschalten des Zustandes der Kupplungsvorrichtung (High/Rev/C, Low/C), ein Übersetzungsverhältnis des stufenlos veränderbaren Getriebes vom verzweigten Typ, repräsentiert **durch** ein Verhältnis der Drehzahl des Eingangselementes (Carr) und eine Drehzahl des Ausgangselements (Sun1, Sun2), höher als ein vorbestimmter Wert ist und um das andere (Sun2) der zwei Rotationselemente (Sun1, Sun2) als das Ausgangselement auszuwählen **durch** das Umschalten des Zustandes der Kupplungsvorrichtung (High/Rev/C, Low/C), wenn das Übersetzungsverhältnis des stufenlos veränderbaren Getriebes vom verzweigten Typ kleiner als der vorbestimmte Wert ist.

5. Stufenlos veränderbares Getriebe vom verzweigten Typ nach Anspruch 4, **dadurch gekennzeichnet, dass** das Übersetzungsverhältnis der stufenlos veränderbaren Getriebevorrichtung auf ein synchrones Übersetzungsverhältnis (RSP) festgelegt wird, so dass die Drehzahl des einen der zwei Rotationselemente (Sun1, Sun2), angeordnet an beiden Endabschnitten des Hebels, gleich zu der Drehzahl des anderen der zwei Rotationselemente (Sun1, Sun2) ist, wenn das Übersetzungsverhältnis des stufenlos veränderbaren Getriebes vom verzweigten Typ zu dem vorbestimmten Wert gleich ist und ein Umschalten des Ausgangselementes ausgeführt wird zwischen den zwei Rotationselementen (Sun1, Sun2), angeordnet an beiden Endabschnitten des Hebels, wenn das Übersetzungsverhältnis des stufenlos veränderbaren Getriebes vom verzweigten Typ zu dem synchronen Übersetzungsverhältnis (RSP) gleich ist.

6. Stufenlos veränderbares Getriebe vom verzweigten Typ nach einem der Ansprüche 1 bis 3, **gekennzeichnet durch** außerdem aufweisend eine Kupplungsvorrichtung (High/Rev/C, Low/C), die wahlweise im Eingriff oder außer- Eingriff ist, um eines der zwei Rotationselemente (Sun1, Sun2), angeordnet an beiden Endabschnitten des Hebels, auszuwählen, einen Niedrigmodus- Ausführungsabschnitt, der eines (Sun1) der zwei Rotationselemente (Sun1, Sun2), angeordnet an beiden Endabschnitten des Hebels, als das Ausgangselement **durch** Steuern der Kupplungsvorrichtung auswählt, wenn ein Übersetzungsverhältnis des stufenlos veränderbaren Getriebes vom verzweigten Typ, repräsentiert **durch** ein Verhältnis zwischen einer Drehzahl des Eingangselementes (Carr) und einer Drehzahl des Ausgangselementes (Sun1, Sun2), höher als ein vorbestimmter Wert ist, und ein Hochmodus- Ausführungsabschnitt, der das andere (Sun2) der zwei Rotationselemente (Sun1, Sun2) als das Ausgangselement **durch** Steuern der Kupplungsvorrichtung auswählt, wenn das Übersetzungsverhältnis des stufenlos veränderbaren Getriebes vom verzweigten Typ kleiner als der vorbestimmte Wert ist.

7. Stufenlos veränderbares Getriebe vom verzweigten Typ nach Anspruch 6, **gekennzeichnet durch** außerdem aufweisend einen Schaltsteuerungsabschnitt, der das Übersetzungsverhältnis des stufenlos veränderbaren Getriebes vom verzweigten Typ in ein synchrones Übersetzungsverhältnis (RSP) bringt, so dass die Drehzahl von einem (Sun1) der zwei Rotationselemente (Sun1, Sun2), angeordnet an beiden Endabschnitten des Hebels, zu der Drehzahl des anderen (Sun2) der zwei Rotationselemente (Sun1, Sun2) gleich ist, wenn das Übersetzungsverhältnis des stufenlos veränderbaren Getriebes vom verzweigten Typ zu dem vorbestimmten Wert gleich ist und ein Modusumschaltabschnitt, der ein Umschalten des Ausgangselementes zwischen den zwei Rotationselementen (Sun1, Sun2), angeordnet an beiden Endabschnitten des Hebels, ausführt, wenn das Übersetzungsverhältnis des stufenlos veränderbaren Getriebes vom verzweigten Typ zu dem synchronen Übersetzungsverhältnis (RSP) gleich ist.

8. Stufenlos veränderbares Getriebe vom verzweigten Typ nach einem der Ansprüche 1 bis 7, **dadurch gekennzeichnet, dass** die Rotations- Getriebevorrichtung (3) die Eingangsdrehung durch einen Dämpfer (2) aufnimmt.

9. Stufenlos veränderbares Getriebe vom verzweigten Typ nach einem der Ansprüche 1 bis 7, **dadurch gekennzeichnet, dass** das Ausgangselement (Sun1, Sun2) mit einer Ausgangswelle (12) durch die Kupplungsvorrichtung (High/Rev/C, Low/C) verbunden ist.

## Revendications

1. Transmission variable en continu de type ramifié (CVT) comprenant:
un mécanisme de transmission de rotation (3) comprenant plusieurs éléments de rotation (Carr, Sun1, Sun2, Ring) parmi lesquels une rotation et un couple sont transmis, les vitesses de rotation des éléments de rotation (Carr, Sun1, Sun2, Ring) étant représentées par un levier dans un diagramme de levier, l'élément de rotation (Carr) situé à une portion intermédiaire du levier étant utilisé comme élément d'entrée d'une réception d'une rotation d'entrée, un des deux éléments rotatifs (Sun1, Sun2), qui se situent aux deux portions d'extrémité du levier et à des côtés opposés de l'élément d'entrée, étant utilisé comme élément de sortie émettant une rotation de sortie de sorte qu'un premier chemin de transmission de couple pour la transmission d'un couple est produit entre les éléments d'entrée et de sortie (Carr, Sun1, Sun2) dans le mécanisme de transmission de rotation (3); et
un mécanisme (5) de transmission variable en continu (CVT) faisant varier continuellement un rapport de transmission de mécanisme CVT, le mécanisme CVT (5) étant relié aux deux éléments tournants (Sun1, Sun2) situés aux deux portions d'extrémité du levier de sorte qu'un deuxième chemin de transmission pour la transmission du couple est produit entre les éléments d'entrée et de sortie à travers le mécanisme CVT (5), **caractérisée en ce que**
le mécanisme de transmission de rotation (3) comprend quatre éléments tournants (Carr, Sun1, Sun2, Ring), un frein (Rev/B) étant fixé à un élément tournant (Ring) pour arrêter une rotation de cet élément tournant (Ring), qui est un des deux éléments tournants (Carr, Ring) situés à une portion intermédiaire du levier, et qui est différent de l'élément d'entrée (Carr).

2. CVT de type ramifié selon la revendication 1, **caractérisée en ce que** le mécanisme de transmission de rotation (3) comprend un train d'engrenages planétaires Ravigneaux (3).

3. CVT du type ramifié selon la revendication 2, **caractérisée en ce que** le train d'engrenages planétaires Ravigneaux (3) comprend des pignons internes (Pb) et des pignons externes (Pa) qui sont supportés par une porteuse (Carr) et qui sont mis en prise respectivement avec deux roues solaires (Sun1, Sun2), la porteuse (Carr) étant utilisée comme élément d'entrée, les deux roues solaires (Sun1, Sun2) étant les deux éléments tournants qui se situent aux deux portions d'extrémité du levier, dont un est sélectionné comme élément de sortie.

4. CVT du type ramifié selon l'une des revendications 1 à 3, **caractérisée en ce qu'**elle comprend en outre un dispositif d'embrayage (High/Rev/C, Low/C) qui est mis sélectivement dans un état en prise et hors prise pour sélectionner l'un (Sun1) des deux éléments tournants (Sun1, Sun2) situés aux deux portions d'extrémité du levier comme élément de sortie par un changement de l'état du dispositif d'embrayage (High/Rev/C, Low/C) lorsqu'un rapport de transmission de la CVT du type ramifié représenté par un rapport entre une vitesse de rotation de l'élément d'entrée (Carr) et une vitesse de rotation de l'élément de sortie (Sun1, Sun2) est plus élevé qu'une valeur prédéterminée et pour sélectionner l'autre (Sun2) des deux éléments tournants (Sun1, Sun2) comme élément de sortie par le changement de l'état du dispositif d'embrayage (High/Rev/C, Low/C) lorsque le rapport de transmission de la CVT du type ramifié est plus petit que la valeur prédéterminée.

5. CVT du type ramifié selon la revendication 4, **caractérisée en ce que** le rapport de transmission du mécanisme de la CVT est établi à un rapport de transmission synchrone (RSP) de sorte que la vitesse de rotation d'un des deux éléments tournants (Sun1, Sun2) situés aux deux portions d'extrémité du levier est égal à la vitesse de rotation de l'autre des deux éléments tournants (Sun1, Sun2) lorsque le rapport de transmission de la CVT du type ramifié est égal à la valeur prédéterminée, et un changement de l'élément de sortie est exécuté entre les deux éléments tournants (Sun1, Sun2) situés aux deux portions d'extrémité du levier lorsque le rapport de transmission du mécanisme de CVT est égal au rapport de transmission synchrone (RSP).

6. CVT du type ramifié selon l'une des revendications 1 à 3, **caractérisée en** comprenant en outre un dispositif d'embrayage (High/Rev/C, Low/C) qui est sélectivement mis en et hors prise pour sélectionner un des deux éléments tournants (Sun1, Sun2) situés aux deux portions d'extrémité du levier, une section d'exécution de mode bas qui sélectionne un (Sun1) des deux éléments tournants (Sun1, Sun2) situés aux deux portions d'extrémité du levier comme élément de sortie en commandant le dispositif d'embrayage lorsqu'un rapport de transmission de la CVT du type ramifié représenté par un rapport entre une vitesse de rotation de l'élément d'entrée (Carr) et une vitesse de rotation de l'élément de sortie (Sun1, Sun2) est supérieur à une valeur prédéterminée, et une section d'exécution en mode élevé qui sélectionne l'autre (Sun2) des deux éléments tournants (Sun1, Sun2) comme élément de sortie en commandant le dispositif d'embrayage lorsque le rapport de la transmission CVT du type ramifié est inférieur à la valeur prédéterminée.

7. CVT du type ramifié selon la revendication 6, **caractérisée en** comprenant en outre une section de commande de changement qui amène le rapport de transmission du mécanisme de CVT à un rapport de transmission synchrone (RSP) de sorte que la vitesse de rotation d'un (Sun1) des deux éléments tournants (Sun1, Sun2) situés aux deux portions d'extrémité du levier est égal à la vitesse de rotation de l'autre (Sun2) des deux éléments tournants (Sun1, Sun2) lorsque le rapport de transmission de CVT du type ramifié est égal à la valeur prédéterminée, et une section de changement de mode qui exécute un changement de l'élément de sortie entre les deux éléments tournants (Sun1, Sun2) situés aux deux portions d'extrémité du levier lorsque le rapport de transmission du mécanisme de CVT est égal au rapport de transmission synchrone (RSP).

8. CVT du type ramifié selon l'une des revendications 1 à 7, **caractérisée en ce que** le mécanisme de transmission de rotation (3) reçoit la rotation d'entrée à travers un amortisseur (2).

9. CVT du type ramifié selon l'une des revendications 4 à 7, **caractérisée en ce que** l'élément de sortie (Sun1, Sun2) est relié à un arbre de sortie (12) par le dispositif d'embrayage (High/Rev/C, Low/C).
